(19) Europäisches Patentamt
European Patent Office
Office européen des brevets

(11) Publication number: **0 396 246 B1**

(12) # EUROPEAN PATENT SPECIFICATION

(45) Date of publication of patent specification: **01.03.95**

(51) Int. Cl.$^6$: **C08L 83/04**, C08L 83/06, C08L 83/08

(21) Application number: **90303223.3**

(22) Date of filing: **27.03.90**

(54) **Ultraviolet cured silicone gels with controlled modulus and viscosity.**

(30) Priority: **10.04.89 US 335908**

(43) Date of publication of application:
**07.11.90 Bulletin 90/45**

(45) Publication of the grant of the patent:
**01.03.95 Bulletin 95/09**

(84) Designated Contracting States:
**BE DE FR GB IT NL**

(56) References cited:
**EP-A- 0 174 647**
**FR-A- 2 144 835**
**GB-A- 2 152 522**

**CHEMICAL ABSTRACTS, vol. 110, no. 18, 1 May 1989,page 50, abstract no. 155574d, Columbus, Ohio, US; & JP-A-63280766**

(73) Proprietor: **DOW CORNING CORPORATION**
**3901 S. Saginaw Road**
**Midland**
**Michigan 48686-0994 (US)**

(72) Inventor: **Lutz, Michael Andrew**
**1815 Wyllys Street**
**Midland,**
**Michigan (US)**

(74) Representative: **Laredo, Jack Joseph et al**
**Elkington and Fife**
**Prospect House**
**8 Pembroke Road**
**Sevenoaks, Kent TN13 1XR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 396 246 B1

## Description

Electrical and electronic devices are often times protected from adverse chemical, mechanical and thermal environments with a protective coating or encapsulant. Silicones are known to offer advantageous properties when used in such applications because they have useful thermal stability, low temperature properties and electrical properties. Those which might be useful for coating electronic devices, such as wire bonded integrated circuits (IC) or printed wire boards, may be of the elastomeric and gel-like type to offer protection against shock, vibrations and thermal stress. Because of these protective properties, polyorganosiloxane based compositions are desirable for use with electronic and electrical coating and encapsulating compositions.

EP-A-174647 discloses ultraviolet curable organopolysiloxane compositions comprising diacryl functional endblocked polydiorganosiloxanes, mercaptoalkyl groups containing polyorganosiloxanes; and photosensitization systems (C).

An object of this invention is to provide an ultraviolet curable organopolysiloxane composition which has gel-like properties and a predetermined hardness. It is also an object of this invention to provide a means of independently controlling the viscosity of the uncured composition and the hardness of the cured composition.

This invention relates to a composition comprising a blend of acryl functional polydiorganosiloxanes and a photosensitization system for curing the blend when irradiated with ultraviolet radiation, wherein the blend is (A) 4 to 90 mole percent of an acryl functional-endblocked polydiorganosiloxane of the general formula

$$YR'_2SiO(R_2SiO)_nSiR'_2Y$$

(B) 9 to 50 mole percent of a monoacryl functional-endblocked polydiorganosiloxane of the general formula

$$R'_3SiO(R_2SiO)_nSiR'_2Y\ ;$$

and (C) 0 to 65 mole percent of a non-functional polydiorganosiloxane of the formula :

$$R'_3SiO(R_2SiO)_nSiR'_3\ ,$$

where, in the above formulae, R is a monovalent radical selected from alkyl, aryl and fluorinated alkyl; each R' is independently selected from R, hydroxyl and a hydrolyzable group, Y is an acryl functional radical bonded to a silicon atom through a silicon-carbon bond, where the acryl function has the formula

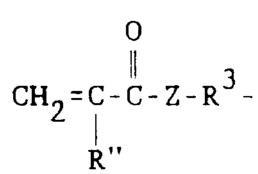

or the formula :

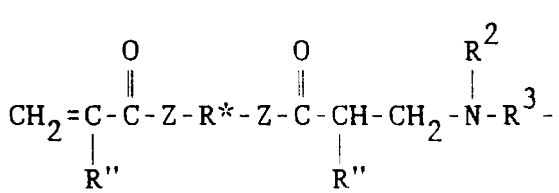

,

in which R'' is hydrogen or methyl, Z is divalent oxygen or -N($R^2$)-, $R^2$ is hydrogen or an alkyl of 1 to 4 carbon atoms, $R^3$ is a divalent hydrocarbon radical having from 1 to 10 carbon atoms per radical, R* is a divalent hydrocarbon radical or a divalent hydrocarbon radical containing ether linkages, and n has a value of from 30 to 3,000, the mole percentages being based on the total blend as 100 mole percent, and where the polydiorganosiloxanes of the blend are present in amounts chosen to provide 20 to 95 percent of the endblocking as acryl functionality and 5 to 80 percent of the endblocking as non-functional.

This invention also relates to a method of independently controlling the viscosity of an uncured composition and the hardness of the cured composition comprising forming a blend of (A) 4 to 90 mole percent of an acryl functional-endblocked polydiorganosiloxane of the general formula :

$YR'_2SiO(R_2SiO)_nSiR'_2Y$ ;

(B) 9 to 50 mole percent of a monoacryl functional endblocked polydiorganosiloxane of the general formula :

$R'_3SiO(R_2SiO)_nSiR'_2Y$ ;

and (C) 0 to 65 mole percent of a non-functional polydiorganosiloxane of the formula :

$R'_3SiO(R_2SiO)_nSiR'_3$ ,

where, in the above formulae, R is a monovalent radical selected from alkyl, aryl and fluorinated alkyl; each R' is independently selected from R, hydroxyl and a hydrolyzable group, Y is an acryl functional radical bonded to a silicon atom through a silicon-carbon bond, where the acryl function has the formula :

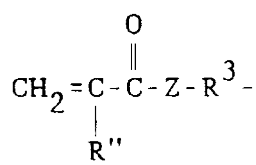

or the formula :

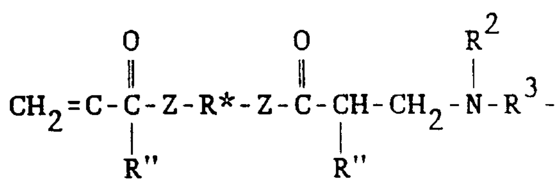

in which R" is hydrogen or methyl, Z is divalent oxygen or $-N(R^2)-$, $R^2$ is hydrogen or an alkyl of 1 to 4 carbon atoms, $R^3$ is a divalent hydrocarbon radical having from 1 to 10 carbon atoms per radical, R* is a divalent hydrocarbon radical or a divalent hydrocarbon radical containing ether linkages, and n has a value of from 30 to 3,000, the mole percentages being based on the total blend as 100 mole percent, and where the polydiorganosiloxanes of the blend are present in amounts chosen to provide 20 to 95 percent of the endblocking as acryl functionality and 5 to 80 percent of the endblocking as non-functional endblocking; varying the amount of nonacryl functional-endblocking and the amount of acryl functional-endblocking, and the value of n, for the polydiorganosiloxanes to provide a predetermined viscosity value for an uncured composition comprising the blend of polydiorganosiloxanes and a photosensitization system, and a predetermined hardness value for the composition cured by exposure to ultraviolet radiation; and irradiating the said composition with ultraviolet radiation to provide a cured material with an hardness value predetermined by the selection of the endblocking and the value of n.

The compositions of the present invention are a blend of acryl functional polydiorganosiloxane and a photosensitization system for curing the blend when the said blend is irradiated with ultraviolet radiation. The acryl functional polydiorganosiloxane is a blend of (A) 4 to 90 mole percent of acryl functional-endblocked polydiorganosiloxane with one acryl function on each terminating siloxane unit; (B) 9 to 50 mole percent of a monoacryl functional-endblocked polydiorganosiloxane with one endblocking siloxane unit having one acryl function and the other endblocking siloxane unit being non-functional, such as being a trimethylsiloxy unit, and (C) 0 to 65 mole percent of a non-functional polydiorganosiloxane.

The acryl functionality can be of many kinds and, for the purposes of this invention the term "acryl functional" or "acryl functionality" refers to the following groups: acrylate ($CH_2=CHCOOC-$), methacrylate {$CH_2=C(CH_3)COOC-$}, N-alkyl-N-acrylamide {$CH_2=CON(R^2)-$} and N-alkyl-N-methacrylamide {$CH_2=C-(CH_3)CON(R^2)-$}. Some examples of acryl functionality include acryloxyalkyl functional, methacryloxyalkyl

functional, acrylamidoalkyl functional and methacrylamidoalkyl functional. These kinds of acryl functionalities on a variety of polyorganosiloxanes are known in the art and can be made by many methods described therein. The particular blend of the present invention is unique and offers unique advantages for compositions which cure upon exposure to ultraviolet radiation, and are useful for coating or encapsulating electronic devices with delicate features such as fine wire bonds.

The acryl functional polydiorganosiloxanes (A) are those which have two acryl functions per molecule, one per terminating or endblocking siloxane unit and have the general formula :

$YR'_2SiO(R_2SiO)_nSiR'_2Y$ ,

in which Y, R, R' and n are defined above. These acryl functional polydiorganosiloxanes of (A) can be those in which R is a monovalent radical such as an alkyl radical, e.g., methyl, ethyl, propyl, butyl or cyclohexyl; an aryl radical such as phenyl, 2-phenylethyl or benzyl; or a fluorinated alkyl radical such as 3,3,3-trifluoropropyl, 2-(perfluoroethyl)ethyl or 2-(perfluorobutyl)ethyl. Each R' is independently selected from hydroxyl, a radical represented by R or a hydrolyzable radical bonded to a silicon atom such as alkoxy illustrated by methoxy, ethoxy, isopropoxy, butoxy and isobutoxy or other non-corrosive hydrolyzable groups such as isopropenoxy, acetamido and ketoximo. The acryl functional polydiorganosiloxanes (A) can have a degree of polymerization such that the value of n ranges from 30 to 3,000, preferably from 50 to 1,000, in which the preferred diorganosiloxane units are selected from dimethylsiloxane, phenylmethylsiloxane diphenylsiloxane and methyl-(3,3,3-trifluoropropyl)siloxane. The acryl functionality, Y, of (A) is bonded to silicon atoms at the end of the polydiorganosiloxane molecules through silicon-carbon bonds and has the formula :

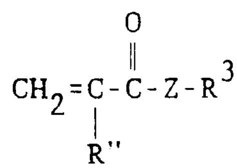

or the formula :

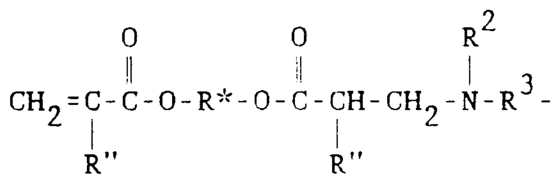,

in which R'' is hydrogen or methyl, Z is divalent oxygen or a divalent radical of the formula $-N(R^2)-$, and $R^2$ is hydrogen or an alkyl of 1 to 4 carbon atoms, such as methyl, ethyl, propyl, isopropyl, butyl, isobutyl or tertiary butyl. $R^3$ is a divalent hydrocarbon radical having 1 to 10 carbon atoms per radical such as methylene, ethylene, butylene, hexylene, propylene, decylene, $-C_6H_4$, $-CH_2CH_2C_6H_4-$,

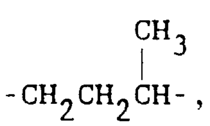, 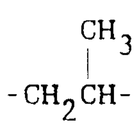 OR 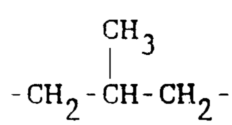,

where the preferred $R^3$ are those having 2 to 6 carbon atoms per radical such as ethylene propylene, isopropylene, butylene, isobutylene, tertiary butylene, pentylene and hexylene. R* is a divalent hydrocarbon radical or a divalent hydrocarbon radical containing ether linkages. Examples of R* as a divalent hydrocarbon radical include methylene, ethylene, propylene, butylene, hexylene, decylene,

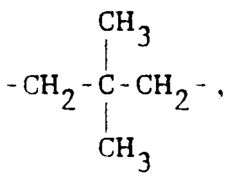

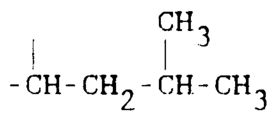

and

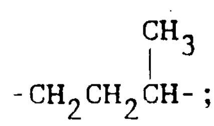

and, as a divalent hydrocarbon radical containing ether linkages, include :
$-CH_2CH_2-O-CH_2CH_2-$, $-(CH_2CH_2O)_3-CH_2CH_2-$,
$-(CH_2CH_2CH_2O)_2-CH_2CH_2CH_2-$, $-(CH_2CH_2O)_8-CH_2CH_2-$,

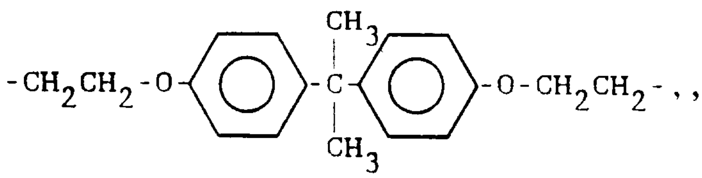

$-(CH_2CH_2CH_2CH_2O)_{7.8}-CH_2CH_2CH_2CH_2-$, $-(CH_2CH_2O)_2-CH_2CH_2-$
and

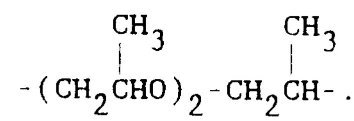

Acryl functional polydiorganosiloxanes (A) in which Z is divalent oxygen atom are known in the art and can be prepared by a number of methods. (A) can be an acryloxyalkyl-endblocked polydiorganosiloxane which can be prepared by the reaction of an hydroxyl-endblocked polydiorganosiloxane with an acryloxyalkylsilane having hydrolyzable functionality which reacts with the hydroxyl groups to form (A). Such an acryloxyalkyl functional polymer would have the following general formula :

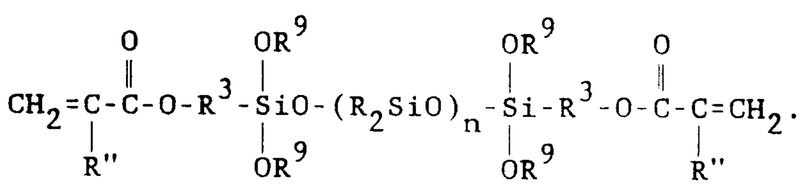

wherein $R^9$ is an alkyl radical having from 1 to 4 carbon atoms per radical. Polydiorganosiloxanes (A), prepared by this method, are preferably those endblocked with gamma-acryloxyalkyldimethoxysiloxy units where the alkyl is preferably propylene or isobutylene. These polydiorganosiloxanes (A) may be prepared, for example, by mixing an hydroxyl-endblocked polydiorganosiloxane and a silane such as gamma-acryloxypropyltrimethoxysilane or gamma-acryloxyisobutyltrimethoxysilane, in the presence of a catalyst such as a catalytic amount of alcoholic potassium hydroxide or an organotitanate, e.g., tetraisopropyl titanate. It is recommended that a polymerization inhibitor such as phenothiazine and para-methoxyphenol be used during this process. A slight excess of the theoretical amount of silane is recommended to ensure complete reaction, e.g., 10 weight percent excess. The ingredients are mixed and heated to remove the stoichiometric amount of methanol (in this illustrated method). After the stoichiometric amount of alcohol has been removed, the resulting mixture is neutralized with acetic acid, if KOH is used. The resulting polydiorganosiloxane made from this process may contain some unreacted silane because an excess is used. Because such an excess is usually in the range of less than 20 weight percent, the compositions of this invention can include the excess silane, such as from 5 to 15 weight percent based on the weight of the product of the process. Such acryl functional polydiorganosiloxane (A) can be prepared by the methods

described by Pigeon in U.S. Patent No. 4,290,869, issued September 22, 1981, which shows the siloxanes and their preparation using organotitanate as a catalyst. Lein et al, U.S. Patent No. 4,528,081, issued July 9, 1985, shows the preparation of polydiorganosiloxanes like those described by Pigeon. Nakos et al in U.S. Patent No. 4,699,802, issued October 13, 1987, shows acryloxyalkyl functional polydiorganosiloxanes which contain an hydrolyzable functionality other than alkoxy, such as an oxime, N-alkylamido or isopropenoxy functionality. Lin et al in U.S. Patent No. 4,503,208, issued March 5, 1985, shows acryl functional polydiorganosiloxanes prepared by reacting in the presence of an addition catalyst such as a platinum catalyst, an SiH-endblocked polydiorganosiloxane and propargyl acrylate or propargyl methacrylate. Acryl functional polydiorganosiloxanes prepared by this method preferably do not contain silicon-bonded hydrolyzable groups such as alkoxy groups, for example, 2-methacryloxypropyldimethylsiloxy-endblocked-polydiorganosiloxane.

The acryl functional polydiorganosiloxanes (A) may be those in which the acryl functionality is acrylamide, especially, N-alkyl-N-acrylamide or N-alkyl-N-methacrylamide. The amide polyorganosiloxane (A) having acryl functionality contains two acrylamide functional groups bonded to silicon atoms through Si-C bonds on the terminal silicon atoms of the polymer chain. The remaining organic groups bonded to the silicon atoms of the polyorganosiloxane are defined above for R and are preferably methyl, phenyl or 3,3,3-trifluoropropyl. The acrylamide-functional polydiorganosiloxanes are known in the art from Varaprath in U.S. Patent No. 4,608,270, issued August 26, 1986, which shows the preparation of polyorganosiloxanes with acrylamide functionality on the chain terminals where the useful polymers are those made from primary and secondary amine functional polydiorganosiloxanes. The siloxane units may include dimethylsiloxane units, diphenylsiloxane units, methylphenylsiloxane units, methyl-3,3,3-trifluoropropylsiloxane units and siloxane units having acrylamide functional groups of the formula :

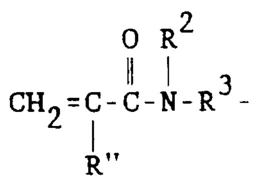 ;

in which $R^2$ is an alkyl radical of one to four carbon atoms such as methyl, ethyl, propyl or butyl and $R^3$ is a divalent hydrocarbon radical of 2 to 6 carbon atoms, such as ethylene, propylene, isobutylene or hexylene. When R" is hydrogen, the acryl functionality is the acrylyl radical, and, when R" is methyl, the acryl functionality is the methacrylyl radical. Polydiorganosiloxanes endblocked with

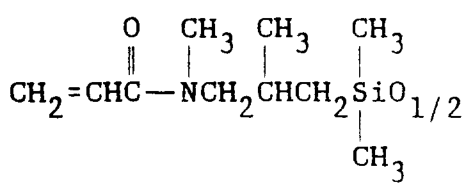

are preferred.

The monoacryl functional-endblocked polydiorganosiloxanes (B) are not particularly well known but can be prepared by many of the methods used to prepare the acryl functional polydiorganosiloxanes (A). The monoacryl functional-endblocked polydiorganosiloxanes (B) are made by first preparing a polydiorganosiloxane in which some of the endblocking units are triorganosiloxy, in which the organic groups are alkyl, aryl or fluoroalkyl, and the remainder of the endblocking units are hydroxyl. Dupree (see below) shows such polymers.

The monoacryl functional-endblocked polydiorgano siloxanes (B) can be prepared by several methods by selecting the proper starting materials. It is difficult to prepare the polydiorganosiloxanes (B) in the pure form, that is, where all the molecules have one non-functional endblock and one acryl functional endblock. Most of the economical methods for the preparation of polydiorganosiloxanes involve the use of equilibration methods and these methods produce statistical distributions of molecular species. For example, the preparation of a polydiorganosiloxane (B) in which the acryl functional endblock is made by the method of reacting a silane with an hydroxyl-endblocked polydiorganosiloxane in the presence of a catalyst, such as

described by Pigeon, Lein et al, Nakos et al and Lin et al, can be used if the starting polydiorganosiloxane is one in which some of the molecules have one hydroxyl endblock and one non-functional endblock such as a trimethylsiloxy unit. Such polydiorganosiloxanes are known from Dupree, U.S. Patent No. 3,274,145 issued September 20, 1966, which shows polydiorganosiloxanes with some of the molecules having one hydroxyl endblock. These hydroxyl-endblocked polydiorganosiloxanes will contain a distribution of molecules such that some of the molecules will have two hydroxyl endblocking groups, some of the molecules will have one hydroxyl endblocking group and non-functional molecules will have two non-functional endblocking groups (triorganosiloxy units). The amount of each type of polydiorganosiloxane which is in the polymer mixture will depend upon the ingredients used to prepare it. For example, when the amount of triorganosiloxy precursor is present in a low concentration in the starting ingredients, the number of molecules which are endblocked with two triorganosiloxy units is low. The number of molecules which contain two triorganosiloxy units increases rapidly as the triorganosiloxy precursor approaches a concentration to provide 50% of the polymer terminals as non-functional terminals and much more rapidly when it exceeds that value. Polydiorganosiloxanes used for component (B) can be best controlled by selecting a method which will provide the desired number of molecules with one hydroxyl endblock. The number of acryl functional-endblocked polydiorganosiloxane (A) molecules and the number of non-functional polydiorganosiloxanes (C) can then be varied to make a variety of blends. Starting with a polydiorganosiloxane with hydroxyl endblocks such as described by Dupree (see above), one can use the method of reacting an acryl functional/alkoxy silane with these polydiorganosiloxanes in the presence of a condensation catalyst such as an organotitanate to make the monoacryl functional-endblocked polydiorganosiloxane (B). Similarly, other methods can be used to make various kinds of (B) polydiorganosiloxanes such as those described for making the acryl functional-endblocked polydiorganosiloxane (A) except that the starting ingredients include a precursor for providing some non-functional endblocking groups. It is possible to prepare directly a composition having the mole percentage values of (A), (B) and (C) within the limits stated above by using such methods.

The non-functional endblocked polydiorganosiloxanes (C) are well known in the art and can be obtained commercially. These non-functional polydiorganosiloxanes are also produced by the methods of making polydiorganosiloxanes (B) which use equilibration techniques.

As stated above, the mole percentages of (A), (B) and (C) are such that (A) is present in amounts to provide 4 to 90 mole percent, (B) is present in amounts to provide 9 to 50 mole percent, and (C) is present in amounts to provide from 0 to 65 mole percent. Those compositions having a blend with zero mole percent (C) are prepared by techniques which use non-equilibration methods for preparing the polydiorganosiloxanes, such as the living polymer method in which cyclic trimer of dimethylsiloxane units is polymerized with alkyl lithium. Such methods can produce polydiorganosiloxanes with one hydroxyl endblock and one triorganosiloxy endblock. The blends of this invention are those which are composed of (A), (B) and (C) to provide 20 to 95 percent of the endblocks as acryl functionality and 5 to 80 percent of the endblocks as non-functional endblocks. The preferred blends contain 45 to 80 percent acryl functional endblocks and 20 to 55 percent non-functional endblocks.

The polydiorganosiloxanes (A) and (B) can be made by a method known as "Michael addition" if the appropriate precursors are used, namely amine-endblocked polydiorganosiloxanes, where there is an amine on both ends of the polydiorganosiloxane, to make (A), and, where there is an amine on only one end of the polydiorganosiloxane with the other end being non-functional, to make (B). Such polydiorganosiloxanes can be used to make the gel compositions of this invention.

Lee et al. in U.S. Patent No. 4,697,026, issued September 29, 1987, teach acryl functional-endblocked polydiorganosiloxanes which are made by a "Michael addition" of diacrylate or dimethacrylate functional compounds with secondary amine functional polydiorganosiloxanes. Lee et al. shows the preparation of polymers which use the "Michael addition" method.

Acryl functional-endblocked polydiorganosiloxanes prepared by the "Michael addition" method are those having at least one acryl functional-endblocking siloxane unit of the general unit formula :

$$O_{0.5}\overset{R_b}{\underset{X'_a}{Si}}-R^3-\overset{R^2}{N}-CH_2-\overset{R''}{CH}-\overset{O}{\overset{\parallel}{C}}-Z-R^{*}-Z-\overset{O}{\overset{\parallel}{C}}-\overset{R''}{C}=CH_2 ,$$

wherein $R^3$, $R^2$, R, R'', R* and Z are as defined above, X' is an hydrolyzable group whose hydrolyzed groups do not form salts with the nitrogen atom, a is 0, 1 or 2, b is 0, 1 or 2 and a + b is two, and the repeating siloxane units present in the polydiorganosiloxane are these having the general unit formula $R_2SiO$ in which R is as defined above.

For polydiorganosiloxane (A), one type of preferred "Michael addition" polydiorganosiloxane containing acryl functionality endblocking is one in which a is 0, b is 2, R is methyl, $R^3$ is

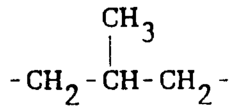

or $-CH_2-CH_2-CH_2-R^2$ is methyl, R'' is hydrogen, Z is divalent oxygen, R* is a divalent hydrocarbon radical of the general formula $-(CH_2)_d-$, in which d is an integer of from 1 to 6, and there is an average of 30 to 3,000 dimethylsiloxane units per molecule.

For "Michael addition" polydiorganosiloxanes (B), the polymers are as described above for (A) except that they have one endblocking triorganosiloxy unit and the other endblocking unit is an acryl functional-endblocking siloxane unit of the formula :

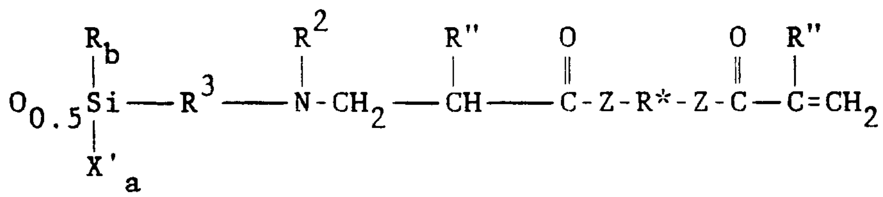

,

in which $R^3$, $R^2$, R, R'', R*, X', Z, a and b are defined above.

The acryl functional-endblocked polydiorganosiloxanes (A) and (B) can be prepared by intimately mixing an amino functional polydiorganosiloxane having endblocking with one primary amine group or secondary amine group per polymer terminal, with an acryl functional compound having two acrylate, methacrylate, acrylamide or methacrylamide groups per molecule. When the amino functional polydiorganosiloxane and the acryl functional compound are mixed, there is a reaction which produces an acryl functional-endblocked polydiorganosiloxane and, depending upon the amine precursor, whether it has an amine function on both ends or on only one end will determine whether the resulting polydiorganosiloxane is a polydiorganosiloxane (A) or (B). This reaction is known as the "Michael-type addition reaction". The reaction occurs at room temperature but is rather slow for many commercial applications, for example, the reaction may take as long as 24 hours or more to convert only 40% of the amine to the acryl functionality.

Heating the mixture increases the rate of the reaction and, at 70 °C., as much as 80% of the amine can be converted to acryl functionality. The mixture should not be heated above 100 °C. because temperatures above 100 °C. can cause considerable loss of the acryl functionality due to a free radical-initiated chain reaction. Free radical scavengers, such as p-methoxy-phenol, are useful to inhibit the unwanted chain reaction, but these scavengers also inhibit the reactivity of the final acryl functional endblocked polydiorganosiloxane during its use, unless they are removed. Accordingly although free radical scavengers can be used, their use adds to the expense of making high purity acryl functional-endblocked polydiorganosiloxanes.

The best reaction conditions are those in which the intimate mixture is formed using a promoter solvent, such as an alcohol. The preferred alcohols are those which can readily be removed from the reaction product without having to heat it to too high a temperature. Examples of promoter alcohols are ethanol and isopropanol. The use of the promoter solvent can increase the rate of the reaction such that 90 to 95% of the amine is converted to the acryl functionality. The fastest reactions are those using a promoter solvent and where the mixture is heated to a temperature above 25 °C. but below 100 °C.

The method just described offers the advantage that the acryl functional-endblocked polydiorganosiloxane can be prepared in the desired structural form before the acryl functionality is in place on the molecule. The amine functional-endblocked polydiorganosiloxane can withstand an higher temperature of preparation than if the acryl functionality were present on the precursor used in preparing the polydiorganosiloxane. For example, the preparation of poly(co-diphenyl-siloxane-co-dimethylsiloxane) requires an alkaline equilibration catalyst with heating to high temperatures, such as 150 °C., of a mixture of cyclopolydimethylsiloxane and

cyclopolydiphenylsiloxane. The preparation of a polymer having dimethylsiloxane units, diphenylsiloxane units and siloxane terminating units having acryl functionality could not survive the reaction without causing the acryl functionality to polymerize and thus an acryl functional polydiorganosiloxane of this type could not be produced. In contrast, for example, a mixture of cyclopolydimethylsiloxane, cyclopolydiphenylsiloxane, alkaline equilibration catalyst and an amine-bearing siloxane precursor could be used to make an amine functional-endblocked poly(co-diphenylsiloxane-co-dimethylsiloxane), which can then be converted into an acryl functional endblocked polydiorganosiloxane at a lower temperature. The amine functionality survives such reactions much more readily than the acryl functionality.

The amine functionality can be either primary or secondary. The primary amine functionality reacts much more readily than the secondary amine functionality. For this reason, the difunctional acryl compounds readily react with the primary amine, and the remaining amine hydrogen atom does not readily react with the acryl functional group. Such a difference in reaction rates between the primary and secondary amines can be used to advantage in the preparation of acryl functional-endblocked polydiorganosiloxanes of either (A) or (B) type. After one of the acryl groups of the difunctional compound reacts with the primary amine, the reaction can be stopped by adding monofunctional acryl compounds to react with the remaining secondary amine hydrogens.

The reaction between the amine functional-endblocked polydiorganosiloxane and the difunctional acryl compound can be stopped by adding a monofunctional acryl compound to the reaction mixture. The monofunctional acryl compound can be added at two points during the reaction. The amine functional-endblocked polydiorganosiloxane and the difunctional acryl compound can be mixed and at the point one wishes the reaction stopped, the mono-functional acryl compound is added. One may also add the monofunctional acryl compound at the beginning of the reaction, but this uses up amine hydrogen atoms, especially primary amine hydrogen atoms. The monofunctional acryl compound is preferably added after the reaction has begun so that the monofunctional acryl compounds do not compete with the difunctional acryl compounds in such a manner that the number of acryl groups on the final silicon compound is not the desired product.

The reaction can also be stopped by another method in which the reaction between the difunctional acryl compound and the amine functional endblocked polydiorganosiloxane is stopped by adding an acid anhydride. Using the acid anhydride to stop the reaction has the same benefits as using a monofunctional acryl compound with respect to shelf stability, but the use of the acid anhydride has the added advantage that a new compound is formed, namely, one in which the acryl functional-endblocked polydiorganosiloxane has the following group :

$$=N-\overset{\overset{\displaystyle O}{\|}}{C}-R^{**} \qquad ,$$

wherein $R^{**}$ is a monovalent hydrocarbon radical or a radical of the general formula $-R^3-COOH$ in which $R^3$ is as defined above.

The amounts of amine functional endblocked polydiorganosiloxane and acryl functional compound should be such that there is at least one molecule of acryl functional compound per two primary amine hydrogens or one secondary amine hydrogen (wherein these primary and secondary hydrogen atoms are present before any reaction with the difunctional acryl compound begins). The foregoing ratio of acryl functional compound to primary amine hydrogen does not mean that the secondary amine hydrogen atoms do not react but only that they react slower and can be readily stopped from reacting by the above-mentioned methods.

The amine functional-endblocked polydiorganosiloxane can be any of those known in the art which have primary and secondary amine functionality at the chain terminals. These amine functional polydiorganosiloxanes can be prepared by methods well known in the art and many are commercially available.

Amine functional silanes used to make the endblocked polydiorganosiloxanes are exemplified by the following general formula

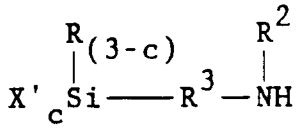

wherein $R^3$, $R^2$, R and X' are as defined above and c is 1, 2 or 3. X' is illustrated by an alkoxy radical or an N,N-dialkylamino radical. Examples of alkoxy radical are methoxy, ethoxy, propoxy, butoxy, 2-ethylhexoxy, isopropoxy, hexyloxy, 2-methoxyethoxy and 2-ethoxyethoxy. Examples of N,N-dialkylamino radicals are dimethylamino, diethylamino and diisopropylamino. Examples of such silanes are gamma-aminopropyltriethoxysilane,
gamma-aminopropylmethyldiethoxysilane,
gamma-aminopropylethyldiethoxysilane, gamma-aminopropylphenyldiethoxysilane, delta-aminobutyltriethoxysilane, delta-aminobutylmethyldiethoxysilane, delta-aminobutylethyldiethoxysilane, delta-aminobutylphenyldiethoxysilane,
gamma-aminoisobutylmethyldimethoxysilane, aminomethyltrimethoxysilane, gamma-aminopropyltrimethoxysilane,
N-methyl-gamma-aminopropyltrimethoxysilane, gamma-aminopropyltripropoxysilane, gamma-aminopropyltri(methoxyethoxy)silane, beta-aminoethyltriethoxysilane, gamma-aminobutyltriethoxysilane, N-methyl-gamma-aminopropylmethyldibutoxysilane,
delta-aminobutyltrimethoxysilane, delta-aminobutyldimethylmethoxysilane, beta-aminopropyltriethoxysilane, N-butyl-gamma-aminopropyltrimethoxysilane and N-methyl-beta-aminopropyltriethoxysilane. Examples of N,N-dialkylamino silanes are gamma-aminopropyltris(N,N-dimethylamino)silane and gamma-aminopropyltris(N,N-diethylamino)silane. These silanes can be used to endblock the polydiorganosiloxane to provide the amine functional-endblocked polydiorganosiloxanes which can be used to make the acryl functional-endblocked polydiorganosiloxanes (A) or (B).

An example of amine functional-endblocked polydiorganosiloxanes for making acryl functional-endblocked polydiorganosiloxanes (A) is one of the following formula :

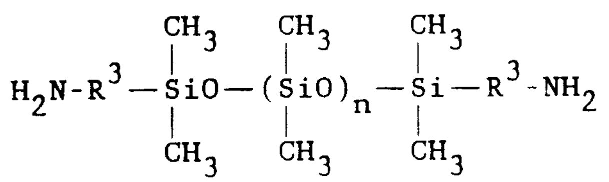

,

in which $R^3$ is as defined above and n has an average value of 30 to 3,000, preferably from 50 to 1,000. An amine functional-endblocked polydiorganosiloxane for making an acryl functional-endblocked polydiorganosiloxane (B) is one having the following general formula :

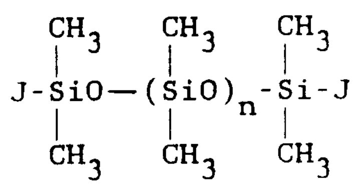

in which n is as defined above; and one J is methyl whilst the other J is $-R^3-NH_2$ or $-R^3-NHR^2$.

The difunctional acryl compounds used to make the acryl functional-endblocked polydiorganosiloxanes are available commercially or can be made by well-known methods. Examples of the difunctional acryl compounds are the diacrylates, including :
1,6-hexanediol diacrylate,

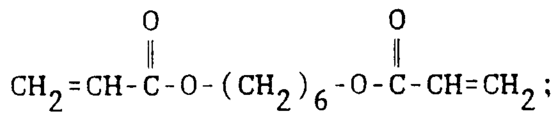

1,4-butanediol diacrylate,

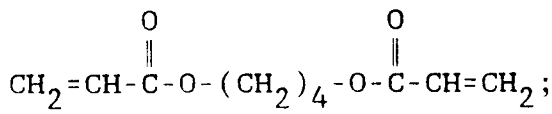

ethylene glycol diacrylate,

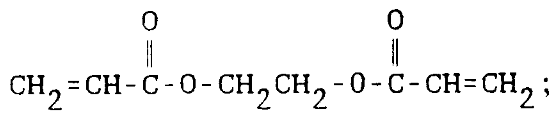

diethylene glycol diacrylate,

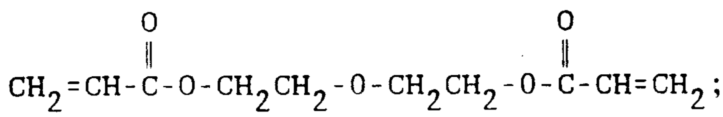

tetraethylene glycol diacrylate,

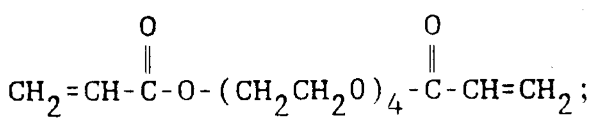

tripropylene glycol diacrylate,

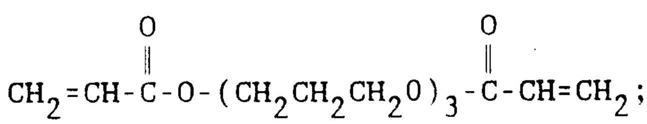

neopentyl glycol diacrylate,

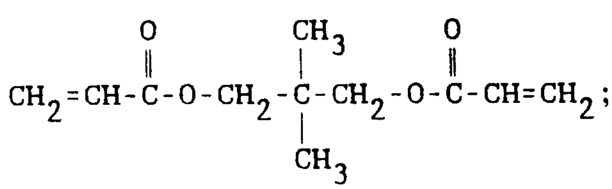

1,4-butanediol dimethacrylate,

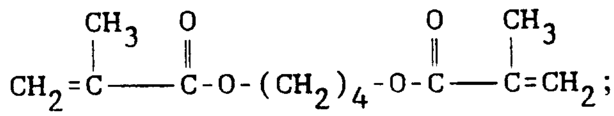

poly(butanediol) diacrylate,

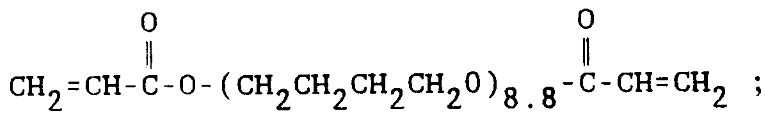

tetrathylene glycol dimethacrylate,

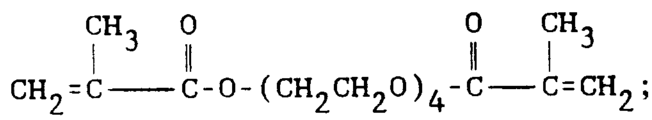

1,3-butylene glycol diacrylate,

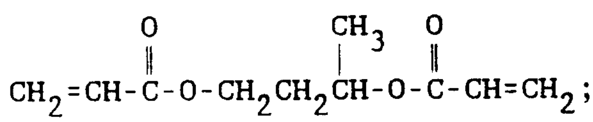

triethylene glycol diacrylate,

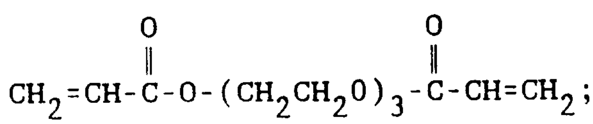

triisopropylene glycol diacrylate,

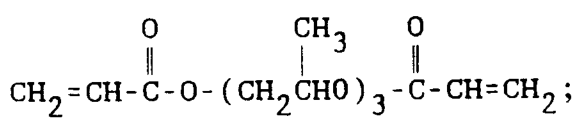

polyethylene glycol diacrylate,

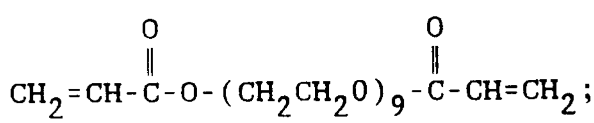

ethoxylated bisphenol A diacrylate,

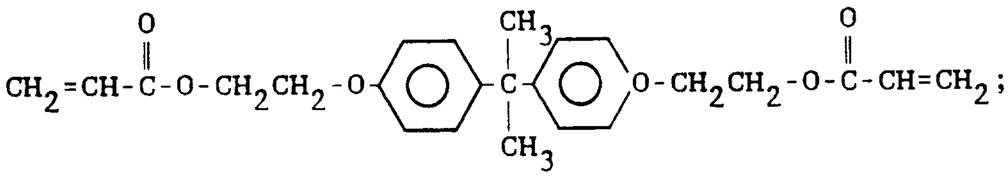

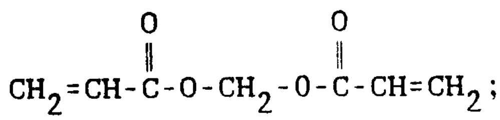

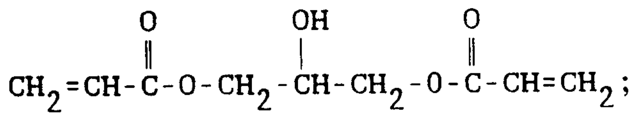

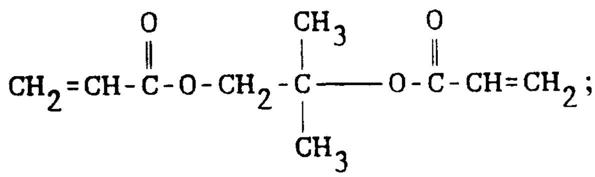

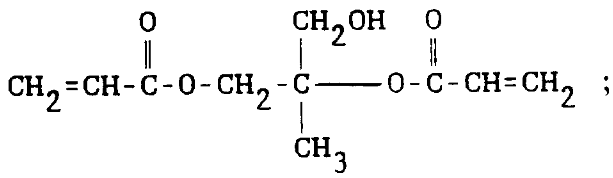

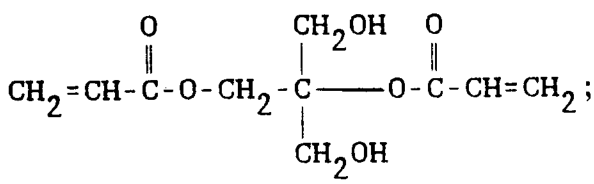

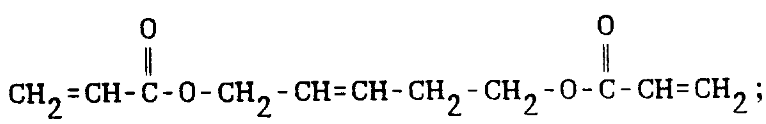

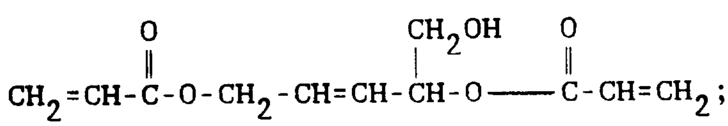

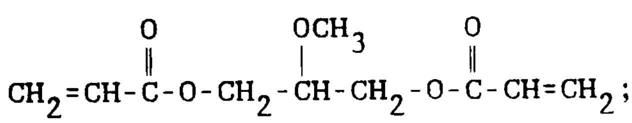

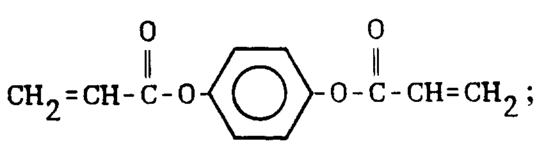

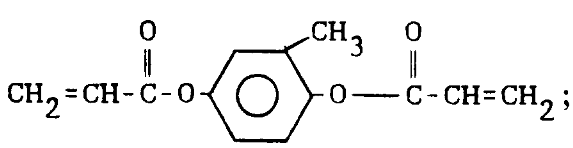

N,N'-hexamethylene-bis-methacrylamide

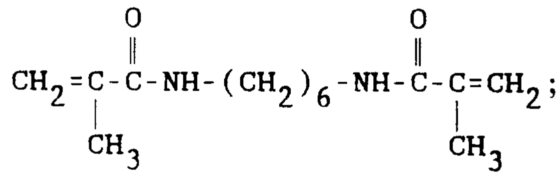

N,N'-isovalerylidene-bis-methacrylamide,

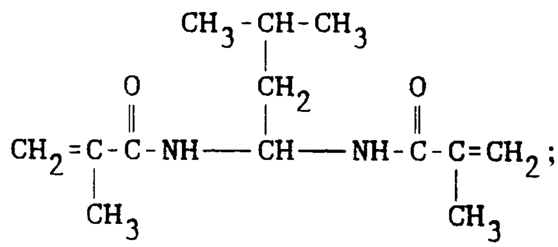

and N,N'-methylene-bis-methacrylamide,

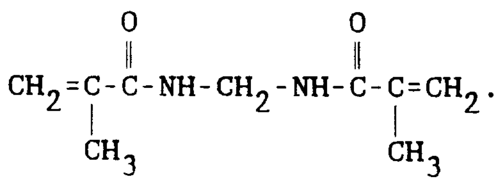

The monofunctional acryl compounds used to stop the reaction between the difunctional acryl compound and the amine functional-endblocked polydiorganosiloxane can be illustrated by ethylhexyl acrylate, isobornyl acrylate, methyl methacrylate, n-butyl acrylate, ethyl acrylate, methyl acrylate, N,N'-dimethyl acrylamide and ethyl methacrylate.

The anhydrides which can be used to stop the reaction and also produce new compounds can be illustrated by acetic anhydride, propionic anhydride, butyric anhydride, isovaleric anhydride, caproic anhydride, palmitic anhydride, stearic anhydride, succinic anhydride and glutaric anhydride.

Silanes which have the acryl functionality can be used to prepare the acryl functional-endblocked polydiorganosiloxane (A) or (B) by reacting the silane with the hydroxyl-endblocked polydiorganosiloxane in the presence of a condensation catalyst as described above. Such silanes can be of the following general formula :

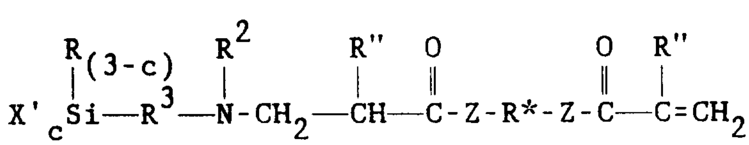

wherein $R^3$, $R^2$, R, X', R'', R*, Z and c are as defined above. Preferably, $R^3$ is an alkylene radical of 3 to 10 carbon atoms, R is methyl, X' is $OR^9$, R'' is hydrogen, R* is a divalent hydrocarbon radical, Z is divalent oxygen and a is 3.

The compositions of this invention comprise the blend of polydiorganosiloxanes (A), (B) and (C) with a photosensitization system which comprises a photoinitiator useful in curing the acryl functional-endblocked polydiorganosiloxanes to form a gel with an hardness and modulus suitable for encapsulating and/or coating electronic devices which have fragile components. The compositions are cured by exposure to ultraviolet radiation. The photosensitization system may include other ingredients useful for photocuring such as amines as chain transfer agents, especially tertiary amines. Other ingredients are known in the art.

The blend of this invention can be mixed with a photoinitiator and then exposed to ultraviolet radiation to cause the siloxane to crosslink. The photoinitiator is used in amounts sufficient to provide the desired cure. Examples of photoinitiators include benzoin; benzoin alkyl ethers such as methyl, ethyl, isopropyl and isobutyl benzoin ethers; and acetophenone derivatives, such as dialkoxyacetophenones, exemplified by diethoxyacetophenone, dichloroacetophenone, trichloroacetophenone, alpha,alpha-dimethoxy-alpha-phenylacetophenone, 1-hydroxycyclohexylphenyl ketone, 2-hydroxy-2-methyl-1-phenylpropane-1-one, methylphenyl glyoxylate, 4-benzoylbenzyl-trimethylammonium chloride, alpha-acyloxime esters such as 1-phenyl-1,2-propanedione-2-(O-ethoxycarbonyloxime), benzophenone in combination with a chain transfer agent such as an amine compound and azo-bis(isobutyronitrile), benzil ketals and ketone amine derivatives. Polysilanes are useful in the compositions which are to be cured by ultraviolet radiation. The polysilane photoinitiators are those which have a chain of catenated silicon atoms in either a linear configuration or a ring configuration. The polysilanes are soluble in the blend. The polysilanes may be the phenylmethylpolysilanes defined by West in U.S. Patent No. 4,260,780, issued April 7, 1981; the aminated methylpolysilanes defined by Baney et al. in U.S. Patent No. 4,314,956, issued February 9, 1982; the methylpolysilanes of Peterson et al. in U.S. Patent No. 4,276,424, issued June 30, 1981; or the polysilastyrenes defined by West et al. in U.S. Patent No. 4,324,901, issued April 13, 1982.

Photoinitiators which are particularly useful in these compositions include ;

$C_6H_5$-C(O)C($CH_3$)$_2$-OH,

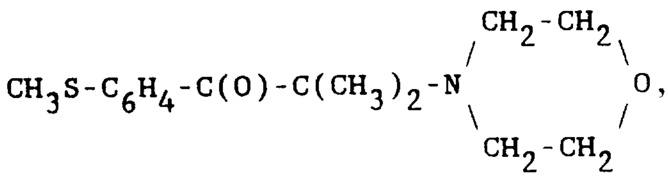

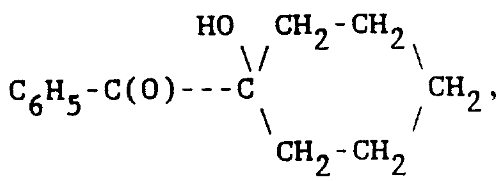

and benzoin methyl ether.

The compositions comprising the blend and photoinitiator are reasonably stable during storage but, for additional protection and for exceptional situations, one may find it advantageous to add a storage stabilizer. Thus, the compositions may contain storage stabilizers including amines, particularly tertiary amines such as diisopropylaminoethanol and trioctylamine. Another type of viscosity stabilizer is of the free radical scavenger type, such as p-methoxyphenol (also known as the monomethyl ester of hydroquinone), catechol, 4-t-butylcatechol, phenothiazine, hydroquinone, 2,6-di-t-butyl-p-methylphenol and N-phenyl-2-naphthylamine. The free radical scavenger viscosity stabilizers are preferably used in amounts of up to one weight percent based on the weight of the composition. If a free radical scavenger is used, the amounts should be small, such as from 0.001 to 0.1 weight percent.

Compositions of this invention may also contain optional ingredients which may be suitable for some applications; however, features such as the uncured viscosity, the hardness of the cured material, its electrical properties, and the corrosive nature of the composition, both uncured and cured, should be evaluated when the compositions are to be used as a coating, encapsulant or potting compound for fragile electronic devices. Examples of optional ingredients which may be considered include surfactants, reinforcing agents such as fillers and resins, colorants, heat stabilizers and other property modifiers.

The compositions of this invention made with a blend of the acryl functional-endblocked polydiorganosiloxanes as described above can be made to have uncured viscosities suitable for coating, encapsulating or potting delicate electronic devices which will also cure to gels with a hardness required by the specific application. Different viscosities can be used to achieve the same hardness, therefore, providing a broad range of manufacturing methods for applying the gel composition to a variety of electronic devices. In the alternative, the hardness can be varied while maintaining the same viscosity; therefore, if one has a specific manufacturing method for applying a gel composition and the hardness requirements for the gel

change, one can maintain the viscosity and change the hardness. The viscosity of the uncured gel composition and the hardness or modulus of the gel can be varied independently of one another. For example, at a given viscosity of blend, the total amount of non-functional-endblocking of the polydiorganosiloxane can be varied to give a specific hardness, or the total amount of non-functional-endblocking can be held constant and the mole ratios of (A), (B) and (C), respectively, can be varied, or a combination of both the total amount of non-functional endblocking and the mole ratios of (A), (B) and (C), respectively, can be varied. Increasing the number of polymer terminating groups which are non-functional generally reduces the hardness.

The compositions of this invention rapidly cure when exposed to ultraviolet radiation, usually in a few seconds, and, because they are based on polyorganosiloxanes, they are suitable for integrated circuit protection. These compositions have excellent purity and a low moisture uptake, provide stress relief even at low temperatures, demonstrate excellent electrical properties, are thermally stable and can protect against harsh environments. Because of the nature of the compositions of this invention which allow independent variations of viscosity and hardness, they are useful for photobarrier processing, involving "in-situ" generation of flow barriers during material application and photoimaging to allow wafer stage application of permanent protective coatings. The compositions are shelf stable and can be shipped as an one-package container product. The compositions can be used to protect integrated circuits, and can be used in manufacturing where rapid processing is needed, such as on automated production lines.

The following examples are presented for illustrative purposes and should not be construed as limiting this invention which is properly delineated in the claims. In the following examples, "part" or "parts" represents "part by weight" or "parts by weight" and the viscosity is measured at 25 °C. unless otherwise stated.

**Example 1**

An amino functional polydiorganosiloxane (Amino-blend A) was prepared by mixing in a 2-liter, 3-necked flask fitted with a thermometer, nitrogen purge, stirrer and condenser, 9.08 g of trimethylsiloxy endblocked polydimethylsiloxane having a viscosity of 2 centistokes and an average formula of :

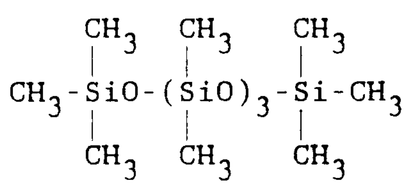

21.58 g of a disiloxane of the formula

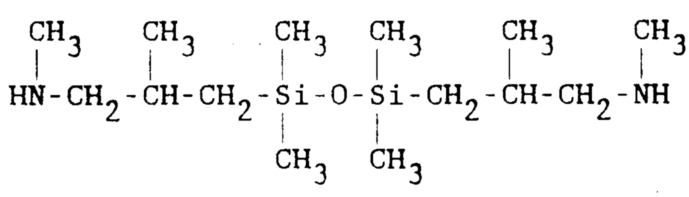

192.96 g of poly(methylphenylsiloxane) cyclics having from 3 to 6 methylphenylsiloxane units per molecule, and 1276.38 g of poly(dimethylsiloxane) cyclics having from 3 to 6 dimethylsiloxane units per molecule. The resulting mixture was heated for one hour at 150 °C. to dry the ingredients while purging with dry nitrogen gas, cooled to 50 °C. and then catalyzed with 1.52 g of potassium silanolate and 7.5 g of dimethylformamide. The catalyzed mixture was heated for 20 hours at 150 °C., cooled, neutralized with dry ice for 30 minutes and then pressure filtered. The mixture became viscous 3 hours after catalysis and, then, the viscosity dropped, which indicated that the reaction to reach equilibrium requires at least 4 hours' reaction time. After the reaction product had been filtered, it was stripped at 170 °C. at 0.67 kPa (5 mm of Hg). The resulting polymer mixture was a light yellow fluid, designated "Amino-blend A", and had an average formula :

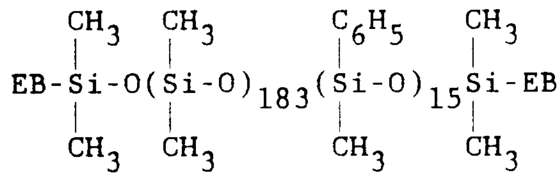

in which EB represents the endblocking in the polymer mixture. The mixture contained, according to the calculated values, 56.25 mole percent of polymer molecules having two amino functional endblocking groups of the formula :

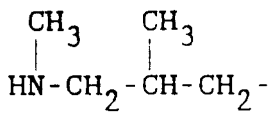

37.5 mole percent of polymer molecules having one EB being the amino functional radical shown above and the other EB being methyl (non-functional), and 6.25 mole percent of the polymer molecules being endblocked with methyl groups (non-functional). Other descriptions herein of the mole percentages of the blends obtained by equilibration methods are calculated values. "Amino-blend A" had 75 percent of its endblocking groups as amino groups and 25 percent of its endblocking groups as methyl groups.

An acrylamide functional polydiorganosiloxane ("Acrylamide-blend A") was prepared by mixing, in a 3-liter, 3-necked flask equipped with a stirrer, a condenser, a thermometer and an addition funnel, 400 g of "Amino-blend A", 1200 cc of methylene chloride, 23.9 cc of a 2N aqueous sodium hydroxide solution, 20 cc of a 15 weight percent sodium nitrite aqueous solution and 356 cc of water. The temperature was reduced to 0 °C. and 3.38 cc of (3.77 g) acryloyl chloride in 6.8 cc of methylene chloride were added to the stirred "Amino-blend A" mixture. The addition was completed within 5 to 10 minutes and the reaction was continued for 30 minutes while allowing the temperature to warm to room temperature. The resulting mixture was separated into a methylene chloride solution and an aqueous solution. The aqueous solution was discarded along with three subsequent water washings of the methylene chloride layer. The methylene chloride solution was put into a freezer overnight, removed, filtered through glass wool to remove ice and then neutralized with calcium carbonate by mixing with 1 g of calcium carbonate per 10 g of polymer. The resulting mixture was stirred overnight and pressure filtered, and the methylene chloride was then removed on a rotary evaporator up to 40 °C. at less than 1.34 kPa (10 mm of Hg). The resulting product was a clear fluid with a light yellow color, designated herein as "Acrylamide-blend A" and had an average formula as follows :

Formula A 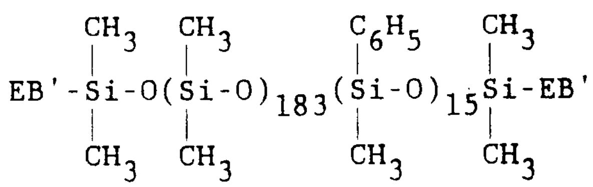

in which EB' represents the endblocking in the polymer mixture. The mixture contained according to the calculated values, 56.25 mole percent of the polymer molecules having two acrylamide functional-endblocking groups of the formula :

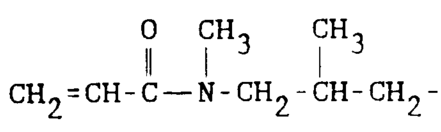

37.5 mole percent of the polymer molecules having one EB' being the acryl functional radical as shown above and the other EB' being group being methyl (non-functional), and 6.25 mole percent of the polymer molecules being endblocked with methyl groups (non-functional). "Acrylamide-blend A" had 75 percent of its endblocking groups as acrylamide groups and 25 percent of its endblocking groups as methyl groups. "Acrylamide-blend A" had a viscosity of 1.175 Pa (1175 centipoise) measured in accordance with ASTM-D1084B, and a molecular weight with an $M_w$ of 38,228 and an $M_n$ of 25,305. The "Acrylamide-blend A" had 6.79 weight percent volatiles when heated for 2 hours at 150 °C.

When polydiorganosiloxanes are prepared by equilibration methods and there are present both functional and non-functional endblocking groups, a statistical distribution of species is obtained. In Table I, the calculated distribution for an equilibrium polymer is provided and compared with a mixture of two polymers having the same total number of non-functional endblocking groups but obtained by mixing a polymer having functional groups on both ends with a polymer having non-functional groups on both ends. Less non-functional polymer is present in the equilibrium polymer system than in the mixture for the same total amount of non-functional ends.

TABLE I

| TOTAL NON-FUNCTIONAL ENDS | BOTH FUNCTIONAL ENDS | EQUILIBRIUM POLYMER ONE FUNCTIONAL END | EQUILIBRIUM POLYMER NO FUNCTIONAL ENDS | MIXTURE ENDS FROM FUNCTIONAL POLYMER | MIXTURE ENDS FROM NON-FUNCTIONAL POLYMER |
|---|---|---|---|---|---|
| 0% | 100% | 0% | 0% | 100% | 0% |
| 5% | 90.25% | 9.5% | 0.25% | 95% | 5% |
| 10% | 81% | 18% | 1% | 90% | 10% |
| 15% | 72.25% | 25.5% | 2.25% | 85% | 15% |
| 20% | 64% | 32% | 4% | 80% | 20% |
| 25% | 56.25% | 37.5% | 6.25% | 75% | 25% |
| 50% | 25% | 50% | 25% | 50% | 50% |
| 75% | 6.25% | 37.5% | 56.25% | 25% | 75% |
| 80% | 4% | 32% | 64% | 20% | 80% |
| 85% | 2.25% | 25.5% | 72.25% | 15% | 85% |
| 90% | 1% | 18% | 81% | 10% | 90% |
| 95% | 0.25% | 9.5% | 90.25% | 5% | 95% |
| 100% | 0% | 0% | 100% | 0% | 100% |

Compositions were made from "Acrylamide-blend A" and various compounds which might be considered useful as photosensitization systems. These included

P-1 = 2-hydroxy-2-methylphenylpropanone (Darocur™ 1173)
P-2 = diethoxyacetophenone
P-3 = (1-hydroxycyclohexyl)phenylmethanone (Irgacure™ 184)
P-4 = benzophenone
P-5 = di-t-butyl peroxide
P-6 = a 50/50 weight mixture of P-1 and diisopropylaminoethanol.

Each of the photosensitization systems was used in an amount of one weight percent, except for P-6 which was used in an amount of two weight percent. The weight percentage was based on the weight of "Acrylamide-blend A". Each of the compositions was cured for a defined period of time by exposure to ultraviolet radiation on an LCU 850 A (manufactured by UVEXS Inc., Mountain View, California), set for 3 seconds per pass which measured about 400 mJ/cm$^2$ using a Light Bug. The hardness of the cured composition was measured by using equipment manufactured by Instrument MFG Co. on the Shore OO durometer scale using a 6.35 mm (0.25 inch) thick section of the cured material. The durometer was determined initially, after heat aging for 20 hours at 150°C. in an oven and after 20 hours in an autoclave at 121°C. and 103.42 kPa (15 psi) pressure. The color was also observed initially and after heat aging using a scale of 0 = clear and 10 = deep yellow. The results were as shown in Table II.

TABLE II

| PHOTOSENSITIZER SYSTEM | CURE TIME SECONDS | INITIAL | DUROMETER HEAT AGED | AUTOCLAVE |
|---|---|---|---|---|
| P-1 | 10 | 45 | 36 | 39 |
| P-2 | 15 | 42 | 30 | 47 |
| P-3 | 5 | 41 | 42 | 40 |
| P-4 | >70 | 44 | 43 | 44 |
| P-5 | >70 | -- | -- | -- |
| P-6 | 35 | 41 | 42 | 34 |

## Example 2

An acrylate functional-endblocked polydiorganosiloxane was prepared by mixing in a flask 2.96 g of a trimethylsiloxy-endblocked polydimethylsiloxane having a viscosity of 2 x $10^{-6}$ $m^2/s$ (2 centistokes), 9.98 g of acrylate-functional silane of the formula

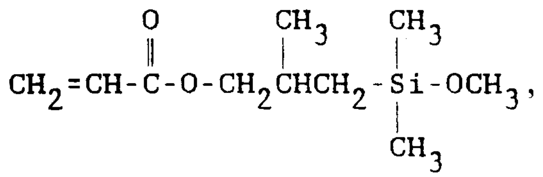

72.11 g of poly(methyl-3,3,3-trifluoropropylsiloxane) cyclics having from 3 to 6 methyl-3,3,3-trifluoropropylsiloxane units per molecule, 416.01 g of poly(dimethylsiloxane) cyclics having from 3 to 6 dimethylsiloxane units per molecule, 0.25 cc of a 10 weight percent solution of 4-methoxyphenol in toluene, 0.46 g of water (110 % of theory) and 0.5 cc of trifluoromethane sulfonic acid. The mixture was heated to 70 ° C. while drawing a vacuum periodically to remove the by-produced methanol for 4.75 hours, neutralized with 2 g of calcium carbonate and cooled overnight. The product was pressure filtered and vacuum stripped on a rotary evaporator to 96 ° C. at less than 0.67 kPa (5 mm of Hg). The product was a clear fluid, "Acrylate-blend A" of the following average formula :

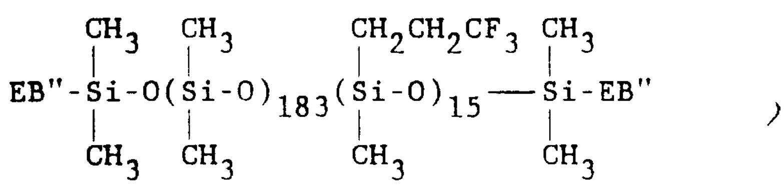

in which EB" represents the endblocking in the polymer mixture. The mixture contained, according to the calculated values, 56.25 mole percent of the polymer molecules having two acryloxy functional-endblocking groups of the formula :

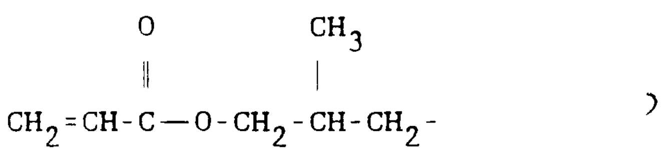

37.5 mole percent of the polymer molecules having one EB" being the acryloxy functional radical as shown above and the other EB" group being methyl (non-functional), and 6.25 mole percent of the polymer molecules being endblocked with methyl groups (non-functional). Acrylate-blend A had 75 percent of the endblocking groups as acrylate groups and 25 percent of the endblocking groups as methyl groups. Acrylate-blend A had a viscosity of 0.740 Pas (740 centipoise) and a molecular weight with an $M_w$ of 20,606 and an $M_n$ of 11,792. The "Acrylate-blend A" had 9.15 weight percent volatiles when heated for 2 hours at 150 ° C.

Compositions were prepared and tested as described in Example 1 with the following exceptions: the compositions were irradiated by giving each of them 30 passes through the LCU 750 A. The results were as shown in Table III.

TABLE III

| PHOTOSENSITIZER SYSTEM | CURE TIME SECONDS | INITIAL | DUROMETER HEAT AGED | AUTOCLAVE |
|---|---|---|---|---|
| P-1 | 35 | 32 | 30 | 6 |
| P-2 | 45 | 33 | 33 | 15 |
| P-3 | 35 | 28 | 30 | 10 |
| P-4 | >70 | -- | -- | -- |
| P-5 | >70 | -- | -- | -- |
| P-6 | 45 | 22 | 10 | 10 |

**Example 3**

A. An amino functional-endblocked polydiorganosiloxane was prepared by charging into a 5-liter, 3-necked flask equipped with a thermometer, nitrogen purge, stirrer, condenser and bubble tube, 449.75 g of poly(methylphenylsiloxane) cyclics having from 3 to 6 methylphenylsiloxane units per molecule and 2905.34 g of poly(dimethylsiloxane) cyclics having from 3 to 6 dimethylsiloxane units per molecule. In a separate container, 0.77 g of potassium hydroxide, 1.18 g of water, 17.5 g of dimethylformamide, 25.07 g of trimethylsiloxy-endblocked polydimethylsiloxane having a viscosity of 2 x $10^{-6}$ $m^2/s$ (2 centistokes) and 18.65 g of a silane of the formula

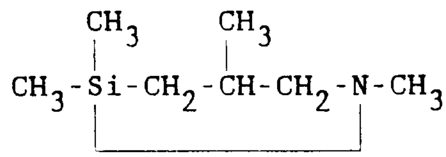

were added with agitation in the order stated to hydrolyze the silane. The mixture exhibited an exotherm and developed a yellow color. After 30 minutes, the hydrolyzed mixture was added to the contents of the 5-liter flask along with 100 g of poly(dimethylsiloxane) cyclics used to wash the container. The mixture in the flask was heated to 155 °C. and this temperature, was maintained for 18 hours. After the temperature had cooled to 55 °C., 1.56 cc of propionic acid were added. After standing overnight, 1.76 g of sodium bicarbonate were added, the mixture was stripped to 170 °C. at less than 1.34 kPa (10 mm of Hg), 35.4 g of Supercell™ were added as a filtering aid, and the mixture was then pressure filtered. The resulting product was a transparent fluid with a faint yellow color. The amino functional-endblocked polydiorganosiloxane had an average formula of :

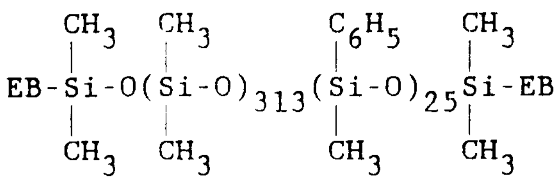

in which EB represents the endblocking in the polymer mixture. The mixture contained according to the calculated values, 25 mole percent of polymer molecules having two amino functional-endblocking groups of the formula :

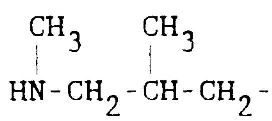

50 mole percent of polymer molecules having one EB being the amino functional radical as shown above and the other EB group being methyl (non-functional), and 25 mole percent of the polymer molecules being endblocked with methyl groups (non-functional). The amino-functional-endblocked polydiorganosiloxane was designated "Amino-blend B" and had 50 percent of the endblocking groups as amino groups and 50 percent of the endblocking groups as methyl groups. "Amino-blend B" had a viscosity of 5.4 Pas (5,400 centipoise) as measured with an HAF #3 spindle at 10 rpm on a Brookfield viscometer and an ANE (amine neutralization equivalent) of 28,730 g/eq.

An acrylamide functional-endblocked polydiorganosiloxane was prepared by adding to a flask, 1275 g of Amino-blend B, 1275 g of hexane and 3.28 g of sodium methoxide. The flask contents were cooled to -2 °C., 4.68 cc of acryloyl chloride in 50 cc of hexane were added and the mixture was allowed to react for 30 minutes. Because the measured acid number was 0.4564 mg KOH/g, 1.16 g of finely ground KOH was added after another 35 minutes. An aliquot was removed and filtered. The measured ANE was 1,160,000 g/eq, which was a 97.5% conversion of the amino functionality to an acrylamide functionality. To the contents of the flask, 12.75 g of sodium bicarbonate, 12.75 g of calcium carbonate and 25.5 g of Supercell™ were added and the mixture was stirred overnight. The contents were then filtered and 50 ppm of 4-methoxyphenol (a 10 weight percent solution in toluene) and 25 ppm of phenothiazine (a 5 weight percent slurry in toluene) were added before vacuum stripping to 50 °C. at less than 1.34 kPa (10 mm of Hg). To the resultant product, 12.75 g of Supercell™ were added and the contents were stirred overnight and then pressure filtered. The product was designated "Acrylamide-blend B" and had a viscosity of 5.74 Pas (5,740 centipoise) with an LV #3 spindle at 12 rpm and an ANE of 66,812 g/eg with a conversion of 57%. The Acrylamide-blend B had an average formula of

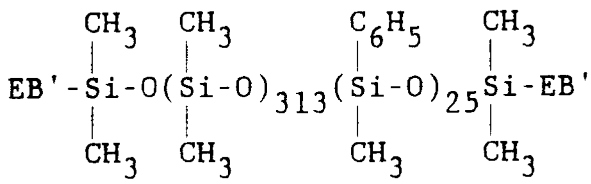,

in which EB' represents the endblocking in the polymer mixture. The mixture would have the following estimated mixture of polymers, 6.25 mole percent of the polymer molecules having two acrylamide functional endblocking groups of the formula :

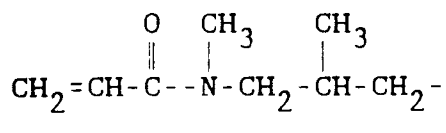,

37.5 mole percent of the polymer molecules having one EB' being the acrylamide functional radical as shown above and the other EB' being group being methyl (non-functional) and 56.25 mole percent of the polymer molecules being endblocked with methyl groups (non-functional). "Acrylamide-blend B" had an estimated 25 percent of its endblocking groups as acrylamide groups and 75 percent of its endblocking groups as methyl groups.

B. "Amino-blend C" was prepared as described above except that the amounts were varied to provide 75 percent of the endblocking groups as amino groups and 25 percent of the endblocking groups as methyl groups. Amino-blend C had an average formula :

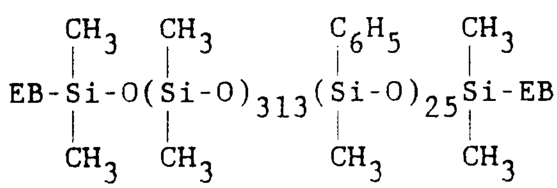,

in which EB represents the endblocking in the polymer mixture. The mixture contained, according to the calculated values, 56.25 mole percent of the polymer molecules having two amino functional-endblocking groups of the formula :

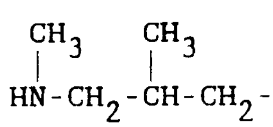,

37.5 mole percent of the polymer molecules having one EB being the amino functional radical as shown above and the other EB group being methyl (non-functional), and 6.25 mole percent of the polymer molecules being endblocked with methyl groups (non-functional). "Amino-blend C" had a viscosity of 8.84 Pas (8,840 centipoise), as measured with an HAF #3 spindle at 10 rpm on a Brookfield viscometer, and an ANE (amine neutralization equivalent) of 20,020 g/eq.

C. "Amino-blend D" was prepared as described above except that the amounts were varied to provide 75 percent of the endblocking groups as amino groups and 25 percent of the endblocking groups as methyl groups. "Amino-blend D" had an average formula :

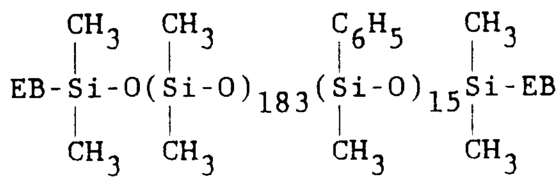

in which EB represents the endblocking in the polymer mixture. The mixture contained according to the calculated values, 56.25 mole percent of the polymer molecules having two amino functional endblocking groups of the formula :

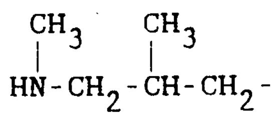

37.5 mole percent of the polymer molecules having one EB being the amino functional radical as shown above and the other EB group being methyl (non-functional) and 6.25 mole percent of the polymer molecules being endblocked with methyl groups (non-functional). "Amino-blend D" had a viscosity of 2.7 Pas (2,700 centipoise), as measured with a HAF #3 spindle at 10 rpm on a Brookfield viscometer, and an ANE (amine neutralization equivalent) of 11,450 g/eq.

D. An acrylamide functional-endblocked polydiorganosiloxane was prepared by adding to a 5-liter, 3-necked flask, 800 g of "Amino-blend C", 800 g of "Amino-blend D", 1600 g of hexane and 6.68 g of sodium methoxide. The mixture was cooled to 0 ° C. and then 9.82 cc of acryloyl chloride in 100 cc of hexane were added in six minutes at which time the temperature of the mixture was -5 ° C. After 1.5 hours, 1.1 g of KOH were added. The resulting mixture had an ANE of 50,762 g/eq, which represented a 71.3 % conversion. The contents of the flask was cooled to 1 ° C. and 2.32 g of sodium methoxide were added for additional conversion and 3.33 cc of acryloyl chloride in 50 cc of hexane were added over a 10 minute period. After 30 minutes, 2.41 g of KOH were added and the resulting mixture was filtered giving a resultant product with an ANE of 565,000 g/eq for a 97.4 % yield. Then, 1 weight percent sodium bicarbonate, 1 weight percent calcium carbonate and 2 weight percent Supercell™ were added, and the resulting mixture was filtered to yield a clear product. To the resulting product, 50 ppm 4-methoxyphenol (10 weight percent solution in toluene) and 25 ppm phenothiazine (5 weight percent slurry in toluene) were added before vacuum stripping to 50 ° C. at less than 1.34 kPa (10 mm of Hg). The product was then rolled overnight with an additional 1 weight percent sodium bicarbonate, 1 weight percent calcium carbonate and 1 weight percent Supercell™. The resultant product after filtering provided "Acrylamide-blend C", which had a viscosity of 5.32 Pas (5,320 centipoise), measured with an HAF #3 spindle at 10 rpm. The ANE of "Acrylamide-blend C" was 194,535 g/eq for a 92.5% conversion. Acrylamide-blend C had 75 percent of its endblocking groups as acrylamide functional groups and 25 percent of its endblocking groups as methyl groups.

E. "Acrylamide-blend B" and "Acrylamide-blend C" were each mixed with 1 weight percent of (1-hydroxycylcohexyl)phenylmethanone, and cured by exposing the sample to ultraviolet radiation from an LCU 750 A by giving them 5 passes at 2.44 m/minute (8 feet/minute) to give a total dose of 2.5 J/cm$^2$ as measured with a Light Bug. The resulting cured samples had respectively a durometer as measured on the Shore OO scale of less than 0 and 47. "Acrylamide-blend B" had a viscosity of 5.74 Pas (5740 centipoise) and "Acrylamide-blend C" had a viscosity of 5.32 Pas (5320 centipoise). This demonstrates that the viscosity can be held constant while independently varying the durometer (hardness).

## Example 4

Acrylamide functional-endblocked polydiorganosiloxanes were prepared as described above and compositions were prepared by adding one weight percent (1-hydroxycyclohexyl)phenylmethanone. Each of the compositions was cured by exposure to ultraviolet radiation of an LCU 750 A giving each sample 20 passes, 60 seconds and a total dose of 10.4 J/cm$^2$. The durometer was measure on each cured sample and the results are shown in Table IV. Composition A was made with an acrylamide functional-endblocked polydiorganosiloxane of Formula A where all the molecules had both endblocking groups as acrylamide, 100% acrylamide endblocking and the viscosity was 53.55 Pas (53,550 centipoise). Composition B was

made with the "Acrylamide-blend A" of Example 1 having 75 percent of the endblocking groups as acrylamide and 25 percent of its endblocking groups as methyl groups. Composition C was made with the acrylamide functional-endblocked polydiorganosiloxane as shown by Formula A except that the average number of dimethylsiloxane units per molecule was 276 and the average number of methylphenylsiloxane units per molecule was 22, and all the molecules had both endblocking groups as acrylamide, 100% acrylamide endblocking, and the viscosity was 51.5 Pas (51,500 centipoise). Composition D was made with an acrylamide-blend as described for "Acrylamide-blend A" of Example 1 except that the average number of dimethylsiloxane units per molecule was 276 and the average number of methylphenylsiloxane units per molecule was 22, and the viscosity was 6.6 Pas (6,600 centipoise).

TABLE IV

| COMPOSITION | VISCOSITY, Pas (cP) | ACRYLAMIDE ENDS, % | DUROMETER SHORE OO |
|---|---|---|---|
| A | 53.55 (53,550) | 100 | 64 |
| B | 1.175 (1,175) | 75 | 41 |
| C | 51.50 (51,500) | 100 | 64 |
| D | 6.60 (6,600) | 75 | 33 |

This example demonstrates the reduction in hardness by using non-reactive endblocking groups. The high viscosity of the acrylamide functional-endblocked polydiorganosiloxanes used to make Compositions A and C would suggest that the durometers should be low being the polymers have acrylamide functionality only on the terminal siloxane units. Because the viscosity is related to molecular weight, the longer the chain lengths, the higher the viscosities. Therefore, because the viscosities for the polymers of Compositions A and C were more than five times those of the polymers of Compositions B and D, the durometers would not be expected to be substantially higher.

**Example 5**

An amino functional-endblocked polydiorganosiloxane was prepared by mixing in a 1-liter, 3-necked flask equipped with a stirrer, thermometer, condenser and nitrogen purge, 3.55 g of trimethylsiloxy-endblocked polydimethylsiloxane having a viscosity of 2 x $10^{-6}$ $m^2/s$ (2 centistokes), 7.93 g of a silane of the formula :

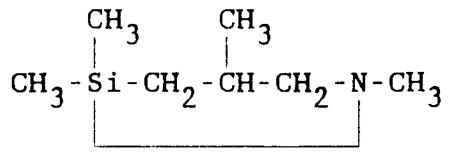
,

86.53 g of poly(methyl-3,3,3-trifluoropropylsiloxane) cyclics having from 3 to 6 methyl-3,3,3-trifluoropropylsiloxane units per molecule, 499.1 g of poly(dimethylsiloxane) cyclics having from 3 to 6 dimethylsiloxane units per molecule, 0.5 g of water (100% of theory) and 1.2 g of potassium silanolate. The mixture was heated at 150 °C. for 26 hours, cooled, neutralized with carbon dioxide, allowed to stand overnight, pressure filtered and then vacuum stripped to 170 °C. at less than 1.34 kPa (10 mm of Hg). The resultant fluid was a clear fluid which is designated "Amino-blend E" and had the following average formula :

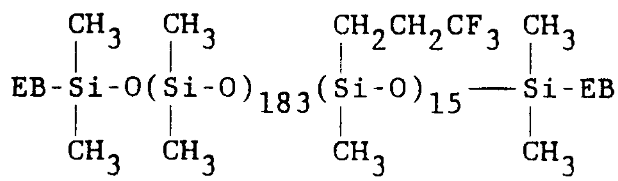
,

in which EB represents the endblocking in the polymer mixture. The mixture contained, according to the calculated values, 56.25 mole percent of the polymer molecules having two amino functional-endblocking groups of the formula :

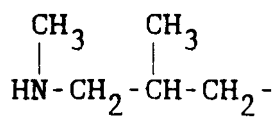
,

37.5 mole percent of the polymer molecules having one EB being the amino functional radical as shown above and the other EB group being methyl (non-functional) and 6.25 mole percent of the polymer molecules being endblocked with methyl groups (non-functional). "Amino-blend E" had 75 percent of its endblocking groups as amino functional and 25 percent of its endblocking groups as methyl (non-functional). Amino-blend E had a viscosity of 1.30 Pas (1,300 centipoise), as measured with an HAF #3 spindle at 10 rpm Brookfield and a molecular weight where $M_w$ was 23,503 and $M_n$ was 16,165.

An acrylamide functional polydiorganosiloxane was prepared following the procedure of Example 1 using the amounts of ingredients as follows: 400 g of "Amino-blend E", 1200 cc of methylene chloride, 24.3 cc of 2N aqueous sodium hydroxide, 20 cc of a 15 weight percent solution of sodium nitrite, 155.7 cc of water and 3.43 cc of acryloyl chloride (3.82 g in 6.9 cc of methylene chloride). The resultant product was a light yellow, slightly hazy fluid which is designated "Acrylamide-blend D", which had the average formula :

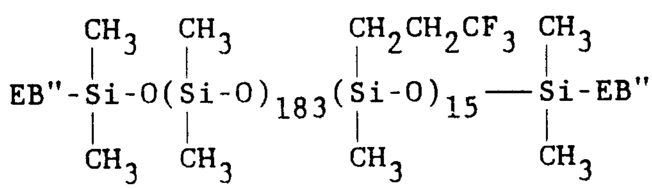
,

in which EB" represents the endblocking in the polymer mixture. The mixture contained according to the calculated values, 56.25 mole percent of polymer molecules having two acrylamide functional-endblocking groups of the formula :

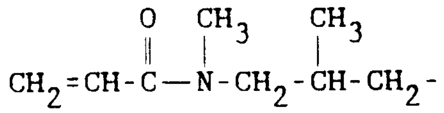

,

37.5 mole percent of the polymer molecules having one EB" being the acrylamide functional radical as shown above and the other EB" group being methyl (non-functional), and 6.25 mole percent of the polymer molecules being endblocked with methyl groups (non-functional). "Acrylamide-blend D" had 75 percent of the endblocking groups as acrylate groups and 25 percent of the endblocking groups as methyl groups. Acrylamide-blend D had a viscosity of 1.35 Pas (1,350 centipoise) and a molecular weight with an $M_w$ of 23,749 and an $M_n$ of 15,683. The "Acrylate-blend D" had 3.42 weight percent volatiles when heated for 2 hours at 150°C.

Compositions were prepared and tested as described in Example 1 with the results obtained shown in Table V.

TABLE V

| PHOTOSENSITIZER SYSTEM | CURE TIME SECONDS | INITIAL | DUROMETER HEAT AGED | AUTOCLAVE |
|---|---|---|---|---|
| P-1 | 20 | 38 | 32 | 34 |
| P-2 | 25 | 38 | 26 | 37 |
| P-3 | 15 | 40 | 35 | 32 |
| P-4 | >70 | -- | -- | -- |
| P-5 | >70 | -- | -- | -- |
| P-6 | 30 | 35 | 34 | 32 |

## Example 6

An amino functional-endblocked polydiorganosiloxane was prepared as described in Example 1 where the ingredients used were as follows: 5.47 g of trimethylsiloxy-endblocked polydimethylsiloxane having a viscosity of 2 x $10^{-6}$ $m^2/s$ (2 centistokes), 10.6 g of a disiloxane of the formula :

$$H_2NCH_2CH_2CH_2\underset{CH_3}{\overset{CH_3}{|}}{Si}-O-\underset{CH_3}{\overset{CH_3}{|}}{Si}CH_2CH_2CH_2NH_2 ,$$

116.19 g of poly(methylphenylsiloxane) cyclics having from 3 to 6 methylphenylsiloxane units per molecule, 768.55 g of poly(dimethylsiloxane) cyclics having from 3 to 6 dimethylsiloxane units per molecule, 0.92 g of potassium silanolate and 4.52 g of dimethylformamide. The product was an amino functional endblocked polydiorganosiloxane blend and is designated "Amino-blend F". The viscosity of Amino-blend F was 8.5 Pas (8,500 centipoise) and had a molecular weight with an $M_w$ of 41,884 and an $M_n$ of 29,513.

An acrylamide functional-endblocked polydiorganosiloxane was prepared as described in Example 1 where the ingredients used were as follows: 400 g of "Amino-blend F", 1200 cc of methylene chloride, 20 cc of 15 weight percent aqueous sodium nitrite solution, 12 cc of an aqueous 2N sodium hydroxide solution, 368 cc of water and 1.71 cc of acryloyl chloride (1.89 g in 6.8 cc of methylene chloride). The resulting product was a yellow transparent fluid which is designated "Acrylamide-blend E" and has the following average formula :

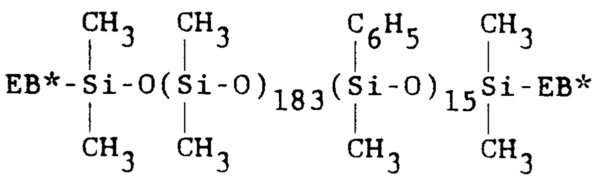

in which EB* represents the endblocking in the polymer mixture. The mixture contained according to the calculated values, 56.25 mole percent of the polymer molecules having two acrylamide functional endblocking groups of the formula :

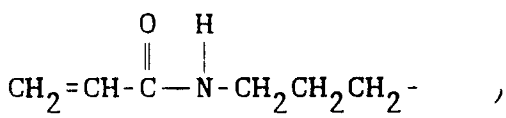

37.5 mole percent of the polymer molecules having one EB* being the acrylamide functional radical as shown above and the other EB* group being methyl (non-functional) and 6.25 mole percent of the polymer molecules being endblocked with methyl groups (non-functional). "Acrylamide-blend E" had 75 percent of the endblocking groups as acrylamide functional and 25 percent of the endblocking groups as methyl (non-functional). "Acrylamide-blend E" had a viscosity of 7.55 Pas (7,550 centipoise), as measured with an HAF #3 spindle at 10 rpm on a Brookfield viscometer, and a molecular weight with an $M_w$ of 23,210 and an $M_n$ of 14,864. Acrylamide-blend E had 6.87 weight percent volatiles when heated for 2 hours at 150 °C.

Compositions which contained one weight percent photoinitiators of P-1, P-2 and P-3 cured to gels with durometers on the Shore OO scale of less than zero.

## Example 7

An amino-functional-endblocked polydiorganosiloxane was pepared as described in Example 3 where the ingredients used were as follows: 0.35 part of trimethylsiloxy-endblocked polydimethylsiloxane having a viscosity of 2 x $10^{-6}$ $m^2/s$ (2 centistokes), 0.79 part of a silane of the formula :

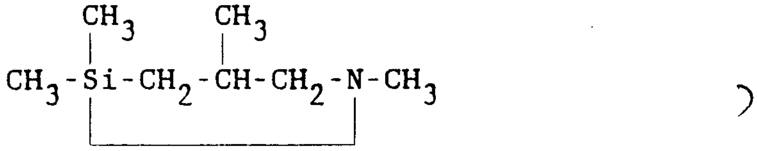

12.47 parts of poly(methylphenylsiloxane) cyclics having from 3 to 6 methylphenylsiloxane units per molecule, 84.8 parts of poly(dimethylsiloxane) cyclics having from 3 to 6 dimethylsiloxane units per molecule, 0.05 part of water (100% of theory) and 0.012 part of potassium hydroxide, 0.49 part of dimethylformamide, 0.024 part of propionic acid, 0.026 part of sodium bicarbonate and 0.98 part of Supercell™. The amino functional endblocked polydiorganosiloxane had a viscosity of 2 Pas (2,000

centipoise) and an average formula :

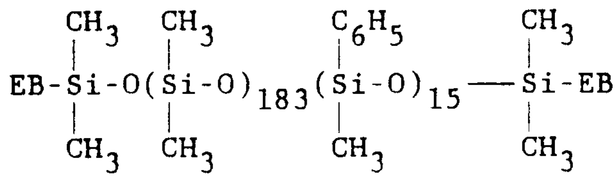

in which EB represents the endblocking in the polymer mixture. The mixture contained according to the calculated values, 56.25 mole percent of the polymer molecules having two amino functional-endblocking groups of the formula :

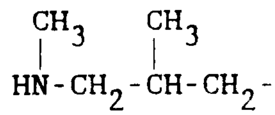

37.5 mole percent of the polymer molecules having one EB being the amino functional radical as shown above and the other EB group being methyl (non-functional), and 6.25 mole percent of the polymer molecules being endblocked with methyl groups (non-functional). This polymer blend is designated "Amino-blend G", which had 75 percent of the endblocking groups as amino functional and 25 percent of the endblocking groups as methyl (non-functional).

An acrylamide functional-endblocked polydiorganosiloxane was prepared as described in Example 1. The resulting acrylamide functional-endblocked polydiorganosiloxane (which is designated "Acrylamide-blend F") had a viscosity of 2 Pas (2,000 centipoise) and an average formula :

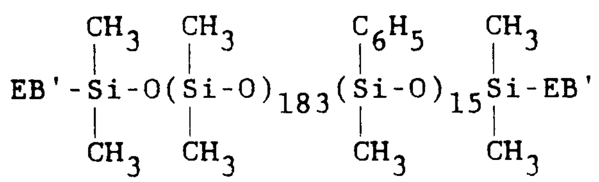

in which EB' represents the endblocking in this polymer mixture. The mixture contained, according to the calculated values, 56.25 mole percent of the polymer molecules having two acrylamide functional endblocking groups of the formula :

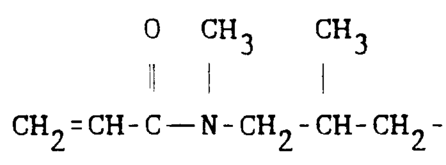

37.5 mole percent of the polymer molecules having one EB' being the acrylamide functional radical as shown above and the other EB' group being methyl (non-functional) and 6.25 mole percent of the polymer molecules being endblocked with methyl groups (non-functional). "Acrylamide-blend F" had 75 percent of the endblocking groups as acrylamide and 25 percent of the endblocking groups as methyl (non-functional).

A gel composition was prepared by mixing 98 parts of "Acrylamide-blend F", 1 part of (1-hydroxycyclohexyl)phenylmethanone and 1 part of an heat stability additive. Sodium and potassium contents were determined on uncured samples of the gel composition by using flame photometry of acid ashed gel composition after removal of silica by treatment with hydrofluoric acid. The amounts of sodium and potassium were each less than 2 ppm. The uncured gel composition had a shelf life greater than 6 months and was thus considered to be an one-package composition. Test samples of the gel composition were cured by exposure to about 2 $J/cm^2$ dose of ultraviolet radiation emitted by medium pressure mercury

vapor arc lamps housed in an UVEXS Model 750A Ultraviolet Curing Unit (LCU) manufactured by UVEXS Inc. of Mountain View, California. The irradiation dose was determined by using an IL 390 Light Bug manufactured by International Light of (Newburyport, Mass.). The durometer was 30 on the Shore OO scale. A sample of cured material exhibited 0.3 weight percent gain after a 24 hour immersion in water at room temperature. As determined by ASTM-D150, the dielectric constant at 100 Hz was 3.0 and at 100,000 Hz was 3.0. As determined by ASTM-D150, the dissipation factor at 100 Hz was 0.006 and at 100,000 Hz was 0.002. The glass transition temperature was -113 ° C. and there was no melting transition temperature as determined by differential scanning calorimetry. The thermal stability was determined by placing a sample of the cured gel composition in a forced air oven at 150 ° C. The Shore OO durometer of this gel did not change more than 15% after 1,000 hours of this thermal aging, which was considered a good performance. The autoclave stability was determined by placing a sample of cured gel composition in an autoclave at 121 ° C. with a pressure of 2.1 $kg/cm^2$. The Shore OO durometer of this gel did not change more than 15% in 100 hours autoclave exposure which was considered a good performance.

## Example 8

A gel composition was prepared by mixing in a container, 490 parts of "Acrylamide-blend C", 210 parts of "Acrylamide-blend B", 7 parts of (1-hydroxycyclohexyl)phenylmethanone and 7 parts of an heat stability additive. The container was placed in an 80 ° C. forced air oven for 30 minutes and its contents were then stirred. This procedure was done to ensure that an homogeneous mixture was obtained. The mixture had a viscosity of 5.36 Pas (5360 centipoise), measured with an HAF #4 spindle at 10 rpm. Samples of the mixture were then exposed to ultraviolet radiation at various dosages using an LCU 750A for curing. The results were as shown in Table VI.

Another gel composition was also prepared by mixing in a container 549.4 parts of Acrylamide-blend B, 5.49 parts of (1-hydroxycyclohexyl)phenylmethanone and 5.49 parts of a heat stability additive. The mixture had a viscosity of 5.52 Pas (5520 centipoise) measured with an HAF #4 spindle at 10 rpm. Samples of this gel mixture were then exposed to UV radiation at various dosages using an LCU 750A for curing. The results were as shown in Table VI.

**TABLE VI**

| UV DOSAGE $J/cm^2$ | DUROMETER, SHORE OO GEL COMPOSITION NO. 1 | DUROMETER, SHORE OO GEL COMPOSITION NO. 2 |
|---|---|---|
| 0.5 | --- | 38 |
| 1.0 | 27 | 42 |
| 1.5 | 32 | --- |
| 2.0 | 32 | --- |
| 2.5 | 32* | 47 |
| 5.0 | 32 | 47 |

*surface had no tack at this dosage, at 2.0 $J/cm^2$ dosage the surface was very slightly tacky

## Example 9

An amino functional-endblocked polydiorganosiloxane was prepared by adding to a 5-liter, 3-necked flask equipped with a condenser, stirrer and a thermometer, 27.17 g of a silane of the formula :

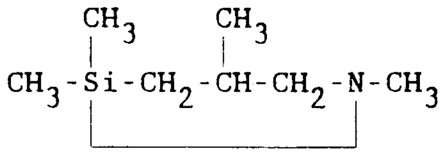

2.85 g of water, 378.79 g of poly(methylphenylsiloxane) cyclics having from 3 to 6 methylphenylsiloxane units per molecule, 2591.26 g of poly(dimethylsiloxane) cyclics having from 3 to 6 dimethylsiloxane units per molecule and 0.425 g of KOH. The resulting mixture was heated at 150 °C. for 24 hours, cooled to 70 °C. and then neutralized with 1.12 g of propionic acid. The mixture was stirred for 1.5 hours and then stripped to 170 °C. at less than 1.34 kPa (10 mm of Hg). To the stripped mixture, 1.27 g of sodium bicarbonate and 30 g of Supercell™ were added and the mixture was then pressure filtered. The resultant amino functional-endblocked polydiorganosiloxane blend had an ANE of 15,660 g/eq, a viscosity of 32.145 Pas (32,145 centipoise) and an average molecular weight with an $M_w$ of 85,106 and an $M_n$ of 29,880. The amino functional blend is designated "Amino-blend H" and has the average formula :

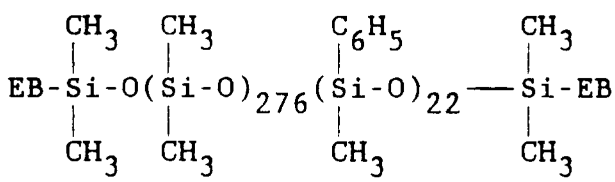

in which EB represents the endblocking in this polymer mixture. The mixture contained according to the calculated values, 56.25 mole percent of the polymer molecules having two amino functional endblocking groups of the formula :

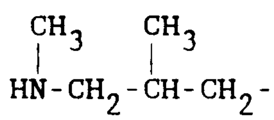

37.5 mole percent of the polymer molecules having one EB being the amino functional radical as shown above and the other EB group being hydroxyl (non-functional) and 6.25 mole percent of the polymer molecules being endblocked with hydroxyl (non-functional). "Amino-blend H" had 75 percent of the endblocking groups as amino functional and 25 percent of the endblocking groups as hydroxyl (non-functional).

An acrylamide functional-endblocked polydiorganosiloxane was prepared by adding to a 3-necked flask 800 g of "Amino-blend H", 2400 cc of methylene chloride, 32.2 cc of a 2N aqueous sodium hydroxide solution and 40 cc of a 15% aqueous solution of sodium nitrite. The contents of the flask were cooled to 0 °C., and 5.09 g of acryloyl chloride in 5.09 g of methylene chloride were added over a 10 minute period. The reaction mixture was stirred for 50 minutes allowing the temperature to increase to room temperature. The resulting mixture was allowed to form phases which separated. The methylene chloride layer was washed three times with water and then placed in a freezer overnight. The ice crystals were separated from the methylene chloride solution, and the solution was stirred with 40 g of calcium carbonate and then pressure filtered. The resultant product was then stripped on a rotary evaporator to 45 °C. at less than 1.34 kPa (10 mm of Hg). The product was an acrylamide functional-endblocked polydiorganosiloxane blend which had a viscosity of 51.533 Pas (51,533 centipoise) with a molecular weight with an $M_w$ of 105,276 and an $M_n$ of 35,424. The acrylamide polymer blend is designated "Acrylamide-blend G" and had the following average formula :

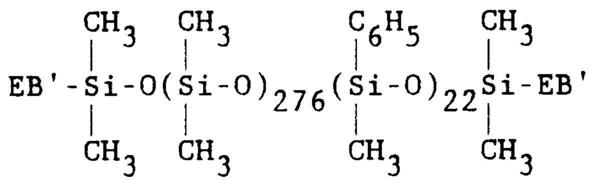

in which EB' represents the endblocking in the polymer mixture. The mixture contained according to the calculated values, 56.25 mole percent of the polymer molecules having two acrylamide functional endblocking groups of the formula :

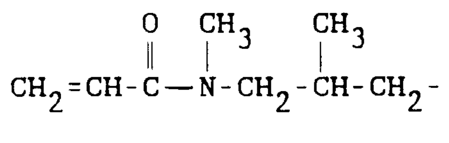

37.5 mole percent of the polymer molecules having one EB' being the acrylamide functional radical as shown above and the other EB' group being hydroxyl (non-functional), and 6.25 mole percent of the polymer molecules being endblocked with hydroxyl groups (non-functional). Acrylamide-blend G had 75 percent of the endblocking groups as acrylamide functional and 25 percent of the endblocking groups as hydroxyl (non-functional).

A gel composition is made from Acrylamide-blend G by mixing it with one weight percent of P-3.

## Example 10

An acrylamide functional-endblocked polydiorganosiloxane having the following formula

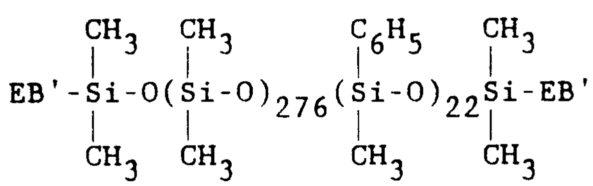

in which EB' represents the endblocking in the polymer mixture was prepared. The mixture contained according to the calculated values, 56.25 mole percent of the polymer molecules having two acrylamide functional endblocking groups of the formula :

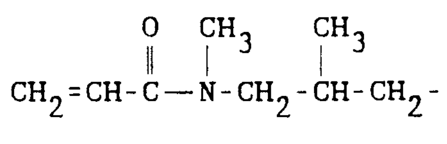

37.5 mole percent of the polymer molecules having one EB' being the acrylamide functional radical as shown above and the other EB' group being methyl (non-functional) and 6.25 mole percent of the polymer molecules being endblocked with methyl groups (non-functional). This acrylamide blend had 75 percent of the endblocking groups as acrylamide functional and 25 percent of the endblocking groups as methyl (non-functional). For this example, this acrylamide blend is designated "Polymer A".

Compositions were prepared by mixing Polymer A with a trimethylsiloxy-endblocked polydimethylsiloxane having a viscosity of 1 Pas (1,000 centipoise), designated "Polymer B" and (1-hydroxycylcohexyl)-phenylmethanone. The amounts of the ingredients were varied to provide different total non-functional endblocking groups, as shown in Table VII. The durometer on the Shore OO scale was measured for each composition after curing by exposing a 4.572 mm (180 mil) thick sample to 8.0 J/cm$^2$ in an LCU-750A. The extractables were determined by immersing weighed samples in heptane for 16 hours, rinsing with fresh

heptane, air drying for 2 hours and then drying for 2 hours at 100 °C. in a forced air oven. The weight loss was calculated and was as shown in Table VII.

TABLE VII

| COMPOSITION | PERCENT NON-FUNCTIONAL ENDS 0% | 10% | 30% | 50% |
|---|---|---|---|---|
| POLYMER A, g | 15.0 | 13.5 | 10.5 | 7.5 |
| POLYMER B, g | 0.0 | 1.5 | 4.5 | 7.5 |
| IRGACURE™ 184, g | 0.15 | 0.15 | 0.15 | 0.15 |
| DUROMETER | 26 | 22 | 8 | <0 |
| EXTRACTABLES, % | 11.0 | 12.8 | 21.0 | 42.0 |

This illustrates the effectiveness of using the compositions made from polydiorganosiloxanes which have some of the molecules endblocked with functional groups on one end rather than using mixtures which contain polydiorganosiloxanes with functional groups on both ends and polydiorganosiloxanes with non-functional groups on both ends. The hardness decreases as the amount of non-functional endblocking groups increases but the amount of extractables also increases.

## Claims

1. A composition comprising a blend of acryl functional polydiorganosiloxanes and a photosensitization system for curing the blend when irradiated with ultraviolet radiation, wherein the blend is (A) 4 to 90 mole percent of an acryl functional-endblocked polydiorganosiloxane of the general formula :

$YR'_2SiO(R_2SiO)_nSiR'_2Y$ ,

(B) 9 to 50 mole percent of a monoacryl functional-endblocked polydiorganosiloxane of the general formula :

$R'_3SiO(R_2SiO)_nSiR'_2Y$ ,

and (C) 0 to 65 mole percent of a non-functional polydiorganosiloxane of the formula :

$R'_3SiO(R_2SiO)_nSiR'_3$ ,

where, in the above formulae, R is a monovalent radical selected from alkyl, aryl and fluorinated alkyl; each R' is independently selected from R, hydroxyl and a hydrolyzable group, Y is an acryl functional radical bonded to a silicon atom through a silicon-carbon bond where the acryl function has the formula

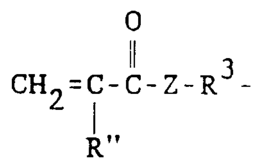

or the formula

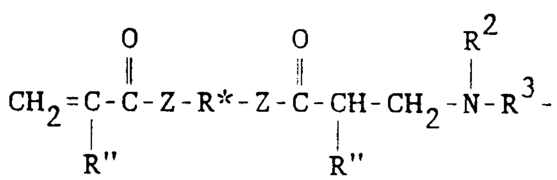

,

in which R" is hydrogen or methyl, Z is divalent oxygen or $-N(R^2)-$, $R^2$ is hydrogen or an alkyl of 1 to 4 carbon atoms, $R^3$ is a divalent hydrocarbon radical having from 1 to 10 carbon atoms per radical, R* is a divalent hydrocarbon radical or a divalent hydrocarbon radical containing ether linkages, and n has a value of from 30 to 3,000, the mole percentages being based on the total blend as 100 mole percent, and where the polydiorganosiloxanes of the blend are present in amounts to provide 20 to 95 percent of the endblocking as acryl functionality and 5 to 80 percent of the endblocking as non-functional.

2. The composition according to claim 1 in which Y is an acrylamide functional group of the formula

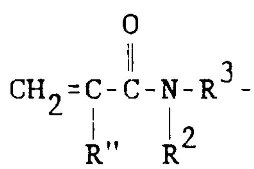

,

in which $R^3$ is a divalent hydrocarbon radical having from 2 to 6 carbon atoms per radical.

3. The composition according to claim 1, further comprising additional polydiorganosiloxane (C) in an amount of from 1 to 60 weight percent based on the total weight of the blend.

4. The composition according to claim 2, further comprising additional polydiorganosiloxane (C) in an amount of from 1 to 60 weight percent based on the total weight of the blend.

5. A method of independently controlling the viscosity of an uncured composition and the hardness of the cured composition comprising forming a blend of (A) 4 to 90 mole percent of an acryl functional-endblocked polydiorganosiloxane of the general formula

$YR'_2SiO(R_2SiO)_nSiR'_2Y$,

(B) 9 to 50 mole percent of a monoacryl functional-endblocked polydiorganosiloxane of the general formula :

$R'_3SiO(R_2SiO)_nSiR'_2Y$ ,

and (C) 0 to 65 mole percent of a non-functional polydiorganosiloxane of the formula :

$R'_3SiO(R_2SiO)_nSiR'_3$ ,

where, in the above formulae, R is a monovalent radical selected from alkyl, aryl and fluorinated alkyl; each R' is independently selected from R, hydroxyl and a hydrolyzable group, Y is an acryl functional radical bonded to a silicon atom through silicon-carbon bond, where the acryl function has the formula

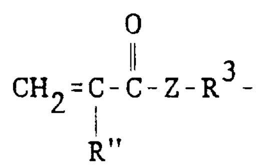

or the formula

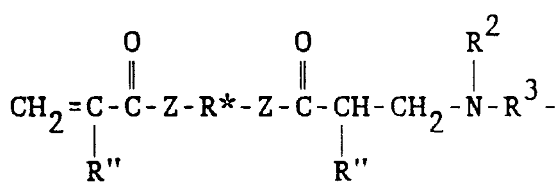

,

in which R'' is hydrogen or methyl, Z is divalent oxygen or $-N(R^2)-$, $R^2$ is hydrogen or an alkyl of 1 to 4 carbon atoms, $R^3$ is a divalent hydrocarbon radical having from 1 to 10 carbon atoms per radical, $R^*$ is a divalent hydrocarbon radical or a divalent hydrocarbon radical containing ether linkages, and n has a value of from 30 to 3,000, the mole percentages being based on the total blend as 100 mole percent, and where the polydiorganosiloxanes of the blend are present in amounts to provide 20 to 95 percent of the endblocking as acryl functionality and 5 to 80 percent of the endblocking as non-functional; varying the amount of non-functional endblocking and the amount of acryl functional endblocking and the value of n for the polydiorganosiloxanes to provide a predetermined viscosity value for an uncured composition comprising the blend of polydiorganosiloxanes and a photosensitization system and a predetermined hardness value for the composition cured by exposure to ultraviolet radiation; and irradiating the composition to provide a cured material with a hardness value predetermined by the selection of the endblocking and the value of n.

**Patentansprüche**

1. Stoffmischung, enthaltend ein Gemisch aus Acryl-funktionalen Polydiorganosiloxanen und ein Photosensibilisierungssystem zur Vernetzung des Gemisches bei Bestrahlung mit ultravioletter Strahlung, wobei das Gemisch besteht aus
   (A) 4 bis 90 Molprozent eines Polydiorganosiloxans mit Acryl-funktionalen Endgruppen und der allgemeinen Formel

   $YR'_2SiO(R_2SiO)_nSiR'_2Y$ ,

   (B) 9 bis 50 Molprozent eines Polydiorganosiloxans mit nur einer Acryl-funktionalen Endgruppe und der allgemeinen Formel

   $R'_3SiO(R_2SiO)_nSiR'_2Y$

und
(C) 0 bis 65 Molprozent eines nichtfunktionalen Polydiorganosiloxans der Formel

$R'_3SiO(R_2SiO)_nSiR'_3$ ,

wobei in den obigen Formeln R einen einwertigen Rest bedeutet, ausgewählt aus Alkyl-, Aryl- und fluorierten Alkylresten; jeder Rest R' unabhängig ausgewählt ist aus den Resten R, der Hydroxylgruppe und hydrolysierbaren Gruppen; Y einen Acryl-funktionalen Rest bedeutet, der über eine Silicium-Kohlenstoff-Bindung an ein Siliciumatom gebunden ist, und wobei der Acryl-funktionale Rest der Formel

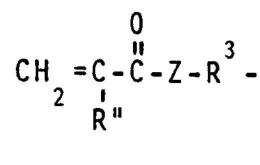

oder der Formel

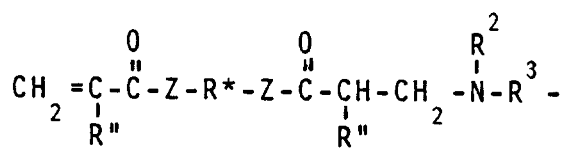

entspricht, wobei R'' Wasserstoff oder Methyl bedeutet, Z zweiwertigen Sauerstoff oder den Rest -N-($R^2$)- bezeichnet, $R^2$ für Wasserstoff oder einen Alkylrest mit 1 bis 4 Kohlenstoffatomen steht, $R^3$ einen zweiwertigen Kohlenwasserstoffrest mit 1 bis 10 Kohlenstoffatomen bedeutet, R* einen zweiwertigen Kohlenwasserstoffrest oder einen Etherbrücken enthaltenden zweiwertigen Kohlenwasserstoffrest bezeichnet und n einen Wert von 30 bis 3.000 besitzt, wobei sich die Molprozente auf das gesamte Gemisch als 100 Molprozent beziehen, und wobei die Polydiorganosiloxane des Gemisches in solchen Mengen vorhanden sind, daß 20 bis 95 Prozent der Endgruppen Acryl-funktional und 5 bis 80 Prozent der Endgruppen nichtfunktional sind.

**2.** Stoffmischung nach Anspruch 1, wobei Y einen Acrylamidfunktionalen Rest der Formel

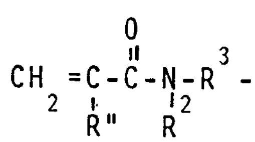

bedeutet, in der $R^3$ einen zweiwertigen Kohlenwasserstoffrest mit 2 bis 6 Kohlenstoffatomen pro Rest bedeutet.

**3.** Stoffmischung nach Anspruch 1, weiterhin enthaltend ein zusätzliches Polydiorganosiloxan (C) in einer Menge von 1 bis 60 Gewichtsprozent, bezogen auf das Gewicht des gesamten Gemisches.

**4.** Stoffmischung nach Anspruch 2, weiterhin enthaltend ein zusätzliches Polydiorganosiloxan (C) in einer Menge von 1 bis 60 Gewichtsprozent, bezogen auf das Gewicht des gesamten Gemisches.

**5.** Verfahren zur unabhängigen Regelung der Viskosität einer nicht vernetzten Stoffmischung und der Härte der vernetzten Stoffmischung , bei dem man ein Gemisch herstellt aus
(A) 4 bis 90 Molprozent eines Polydiorganosiloxans mit Acryl-funktionalen Endgruppen der allgemeinen Formel:

$YR'_2SiO(R_2SiO)_nSiR'_2Y$ ,

(B) 9 bis 50 Molprozent eines Polydiorganosiloxans mit einer Acryl-funktionalen Endgruppe der allgemeinen Formel

$R'_3SiO(R_2SiO)_nSiR'_2Y$

und

(C) 0 bis 65 Molprozent eines nichtfunktionalen Polydiorganosiloxans der Formel

$R'_3SiO(R_2SiO)_nSiR'_3$ ,

wobei in den obigen Formeln R einen einwertigen Rest bedeutet, ausgewählt aus Alkyl-, Aryl- und fluorierten Alkylresten; jeder Rest R' unabhängig ausgewählt ist aus den Resten R, der Hydroxylgruppe und hydrolysierbaren Gruppen; Y einen Acryl-funktionalen Rest bedeutet, der über eine Silicium-Kohlenstoff-Bindung an ein Siliciumatom gebunden ist, und wobei der Acryl-funktionale Rest der Formel

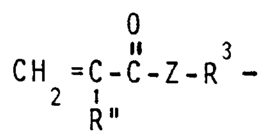

oder der Formel

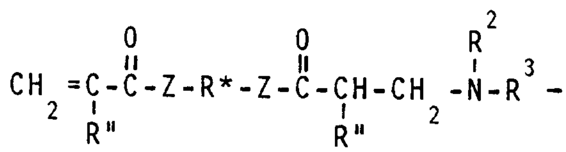

entspricht, wobei R" Wasserstoff oder Methyl bedeutet, Z zweiwertigen Sauerstoff oder den Rest -N-($R^2$)- bezeichnet, $R^2$ für Wasserstoff oder einen Alkylrest mit 1 bis 4 Kohlenstoffatomen steht, $R^3$ einen zweiwertigen Kohlenwasserstoffrest mit 1 bis 10 Kohlenstoffatomen bedeutet, R* einen zweiwertigen Kohlenwasserstoffrest oder einen Etherbrücken enthaltenden zweiwertigen Kohlenwasserstoffrest bezeichnet und $\underline{n}$ einen Wert von 30 bis 3.000 besitzt, wobei sich die Molprozente auf das gesamte Gemisch als 100 Molprozent beziehen, wobei die Polydiorganosiloxane des Gemisches in solchen Mengen vorhanden sind, daß 20 bis 95 Prozent der Endgruppen Acryl-funktional und 5 bis 80 Prozent der Endgruppen nichtfunktional sind, wobei man die Menge an nichtfunktionalen Endgruppen und die Menge an Acryl-funktionalen Endgruppen sowie den Wert von $\underline{n}$ für die Polydiorganosiloxane variiert, so daß sich ein vorbestimmter Wert für die Viskosität der nicht vernetzten, das Gemisch aus Polydiorganosiloxanen und ein Photosensibilisierungssystem enthaltenden Stoffmischung sowie ein vorbestimmter Wert für die Härte der durch Einwirkung von ultravioletter Bestrahlung vernetzten Stoffmischung einstellt, und die Stoffmischung bestrahlt, um ein vernetztes Material mit einem Härtewert zu erzeugen, der durch die Auswahl der Endgruppen und des Wertes von $\underline{n}$ vorbestimmt wurde.

## Revendications

**1.** Une composition comprenant un mélange de polydiorganosiloxanes à fonctionnalité acrylique et un système de photosensibilisation pour durcir le mélange lorsqu'il est irradié par un rayonnement ultraviolet, dans laquelle le mélange consiste en (A) 4 à 90 moles pour cent d'un polydiorganosiloxane à fonctions acryliques terminales de la formule générale :

$YR'_2SiO(R_2SiO)_nSiR'_2Y$ ,

(B) 9 à 50 moles pour cent d'un polydiorganosiloxane à fonction monoacrylique terminale de la formule

générale

$R'_3SiO(R_2SiO)_nSiR'_2Y$ ,

et (C) 0 à 65 moles pour cent d'un polydiorganosiloxane non fonctionnel de la formule

$R'_3SiO(R_2SiO)_nSiR'_3$ ,

où, dans les formules ci-dessus, R est un radical monovalent choisi parmi les radicaux alkyles, aryles et alkyles fluorés ; chaque R' est indépendamment choisi parmi R, un groupe hydroxyle et un groupe hydrolysable, Y est un radical à fonction acrylique lié à un atome de silicium par une liaison silicium-carbone où la fonction acrylique répond à la formule

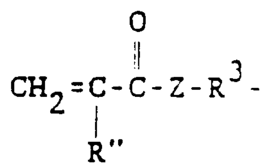

ou à la formule

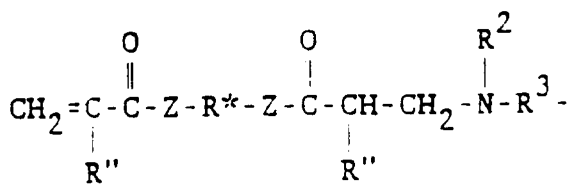

dans lesquelles R" est l'hydrogène ou le radical méthyle, Z est un oxygène divalent ou $-N(R^2)-$, $R^2$ est l'hydrogène ou un radical alkyle de 1 à 4 atomes de carbone, $R^3$ est un radical hydrocarboné divalent ayant 1 à 10 atomes de carbone par radical, R* est un radical hydrocarboné divalent ou un radical hydrocarboné divalent contenant des liaisons éther, et la valeur de n est de 30 à 3000, les pourcentages molaires étant basés sur le mélange total représentant 100 moles pour cent, et où les polydiorganosiloxanes du mélange sont présents en des quantités convenant pour fournir 20 à 95 pour cent des terminaisons sous forme de fonctionnalité acrylique et 5 à 80 pour cent des terminaisons sous forme non fonctionnelle.

2. La composition selon la revendication 1, dans laquelle Y est un groupe à fonction acrylamide de la formule

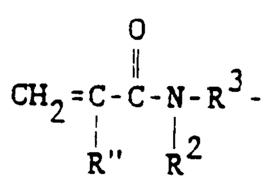 ,

dans laquelle $R^3$ est un radical hydrocarboné divalent ayant 2 à 6 atomes de carbone par radical.

3. La composition selon la revendication 1, comprenant de plus un polydiorganosiloxane supplémentaire (C) en une quantité de 1 à 60 pour cent en poids par rapport au poids total du mélange.

4. La composition selon la revendication 2, comprenant de plus un polydiorganosiloxane supplémentaire (C) en une quantité de 1 à 60 pour cent en poids par rapport au poids total du mélange.

**5.** Procédé pour régler indépendamment la viscosité d'une composition non durcie et la dureté de la composition durcie, consistant à former un mélange de (A) 4 à 90 moles pour cent d'un polydiorganosiloxane à fonctions acryliques terminales de la formule générale

$YR'_2SiO(R_2SiO)_nSiR'_2Y$ ,

(B) 9 à 50 moles pour cent d'un polydiorganosiloxane à fonction monoacrylique terminale de la formule générale

$R'_3SiO(R_2SiO)_nSiR'_2Y$ ,

et (C) 0 à 65 moles pour cent d'un polydiorganosiloxane non fonctionnel de la formule

$R'_3SiO(R_2SiO)_nSiR'_3$ ,

où, dans les formules ci-dessus, R est un radical monovalent choisi parmi les radicaux alkyles, aryles et alkyles fluorés ; chaque R' est indépendamment choisi parmi R, un groupe hydroxyle et un groupe hydrolysable, Y est un radical à fonction acrylique lié à un atome de silicium par une liaison silicium-carbone, où la fonction acrylique répond à la formule

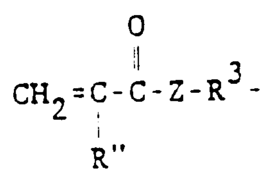

ou à la formule

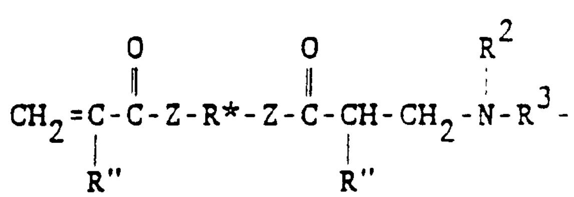

,

dans lesquelles R" est l'hydrogène ou le groupe méthyle, Z est un oxygène divalent ou $-N(R^2)-$, $R^2$ est l'hydrogène ou un groupe alkyle de 1 à 4 atomes de carbone, $R^3$ est un radical hydrocarboné divalent ayant 1 à 10 atomes de carbone par radical, R* est un radical hydrocarboné divalent ou un radical hydrocarboné divalent contenant des liaisons éther, et la valeur de n est de 30 à 3000, les pourcentages molaires étant basés sur le mélange total représentant 100 moles pour cent, et où les polydiorganosiloxanes du mélange sont présents en des quantités convenant pour fournir 20 à 95 pour cent des terminaisons sous forme de fonctionnalité acrylique et 5 à 80 pour cent des terminaisons sous forme non fonctionnelle ; a faire varier la quantité de terminaisons non fonctionnelles et la quantité de terminaisons à fonction acrylique et la valeur de n des polydiorganosiloxanes pour obtenir une valeur de viscosité prédéterminée pour une composition non durcie comprenant le mélange de polydiorganosiloxanes et un système de photosensibilisation et une valeur de dureté prédéterminée pour la composition durcie par exposition à un rayonnement ultraviolet ; et à irradier la composition pour produire une matière durcie ayant une valeur de dureté prédéterminée par le choix des terminaisons et de la valeur de n.